**Europäisches Patentamt**

**European Patent Office**

**Office européen des brevets**

(19)

(11) Veröffentlichungsnummer: **0 261 266 B1**

(12) **EUROPÄISCHE PATENTSCHRIFT**

(45) Veröffentlichungstag der Patentschrift:
22.08.90

(51) Int. Cl.⁵: **E05B 13/10**

(21) Anmeldenummer: **86113172.0**

(22) Anmeldetag: **25.09.86**

(54) Schwenkhebelstangenverschluss.

(43) Veröffentlichungstag der Anmeldung:
**30.03.88 Patentblatt 88/13**

(45) Bekanntmachung des Hinweises auf die Patenterteilung:
**22.08.90 Patentblatt 90/34**

(84) Benannte Vertragsstaaten:
**DE FR GB IT SE**

(56) Entgegenhaltungen:
**EP-A- 0 054 225**
**EP-A- 0 155 543**
**DE-A- 3 506 870**
**US-A- 2 377 301**

(73) Patentinhaber: **Ramsauer, Dieter, Am
Neuhauskothen 20, D-5620 Velbert 11(DE)**

(72) Erfinder: **Ramsauer, Dieter, Am Neuhauskothen 20,
D-5620 Velbert 11(DE)**

(74) Vertreter: **Stratmann, Ernst, Dr.-Ing., Schadowplatz 9,
D-4000 Düsseldorf 1(DE)**

ACTORUM AG

## Beschreibung

Die Erfindung betrifft einen mit Zylinderschloß versehenen Schwenkhebelstangenverschluß für Montage in zwei vorzugsweise gleich großen rechteckigen Durchbrüchen (32, 34) von Blechschranktüren (12), bestehend aus einem Schloßkasten mit durch das Türblatt nach außen geführter Schwenkhebelbetätigungseinrichtung zum Antrieb von zumindest einer parallel zur Türkante verlaufenden Verschlußstange und mit einem den Schwenkhebel in seiner eingeschwenkten Stellung festhaltenden Zylinderschloß, wobei der Schwenkhebelverschluß eine die Aufnahmemulde für den Schwenkhebel bildende Grundplatte umfaßt, die im Bereich der Durchbrüche einstückig von ihr ausgehende und in die Durchbrüche eindringende und die Grundplatte in den Durchbrüchen ausrichtende Ansätze aufweist und den Verschluß mit dem Türblatt fest verbindet, wobei der eine Ansatz eine Aufnahme für das im Ende des Schwenkhebels angeordnete Zylinderschloß bildet, und dieser Ansatz zusammen mit einem von ihm ausgehenden oder mit ihm verschraubten Halteteil das Türblatt im Bereich des einen Durchbruchs zentrierend einklemmt.

Ein derartiger Verschluß ist aus der EP-A 0 054 225 des Anmelders bereits bekannt. Ähnlich aufgebaut ist ein Verschluß gemäß der DE-A 3 506 870. Beide Verschlüsse verwenden ein Getriebe, bei dem jeweils zwei jeweils Rundprofil aufweisende Stangen an einem doppelarmigen Hebel, der von der Schwenkhebelbetätigungswelle verdrehbar ist, angelenkt sind. Diese Konstruktion hat sich zwar bewährt, kann z.B. sowohl für links wie rechts anschlagende Türen verwendet werden, erfordert aber andererseits viel Platz und erlaubt beispielsweise keine Unterbringung in dem Verkantungsraum, der bei manchen Blechschranktüren vorhanden ist. Ein weiterer Nachteil ist der, daß der Hebelantrieb der Stangen deren Führung an mehreren Stellen ihrer Axialerstreckung erschwert, weil die Stangen infolge ihrer Anlenkung an den doppelarmigen Hebel neben einer Axialbewegung gleichzeitig auch eine dazu senkrechte Bewegung ausführen.

Diese Nachteile hat der Schwenkhebelstangenverschluß gemäß der EP-A 0 155 343 nicht. Ein weiterer Vorteil dieses Verschlusses ist der, daß er verhältnismäßig wenig Raum einnimmt und insbesondere so schmal ist, daß er auch in dem bereits oben erwähnten Verkantungsraum von Blechschranktüren ohne Schwierigkeiten untergebracht werden kann. Der Vorteil der Unterbringung in einem derartigen Verkantungsraum ist zum einen der, daß ansonsten toter Raum genutzt werden kann, andererseits das innere lichte Volumen eines Schaltschrankes für andere Bauteile, insbesondere Schalteinrichtungen voll zur Verfügung steht. Da zudem der Verkantungsraum außerhalb des abzudichtenden Bereiches eines derartigen Schaltschrankes liegt, kann meist auf Abdichtmaßnahmen beim Verschluß selbst verzichtet werden.

Der aus dieser weiteren Druckschrift bekannte Verschluß besitzt jedoch wieder andere Nachteile.

So erfordert er neben den zwei gleich großen rechteckigen Durchbrüchen noch zusätzliche runde Durchbrüche, durch die Befestigungsschrauben hindurchgeführt werden. Dies verteuert die Herstellung des Türblattes und verkompliziert die Montage des Verschlusses und vergrößert die Baulänge um die die Befestigungsschrauben aufnehmenden Bereiche. Außerdem ist die Anordnung des Zylinderschlosses innerhalb der Grundplatte insofern ungünstig, als dies die Baulänge noch weiter vergrößert. Weitere Nachteile kommen hinzu: So kann zwar durch besondere Ausgestaltung der Enden der Schubstangen (Anordnung von Verzahnungen an deren beiden Schmalseiten) auch dieser Verschluß sowohl für links wie auch für rechts anschlagende Schaltschranktüren verwendet werden, jedoch können diese Stangen nicht auf einfache Weise bei bereits vormontiertem Schloß gewechselt werden, vielmehr muß vorher das Ritzel in umständlicher Weise aus dem Schloßkasten demontiert, dann die Stangen herausgenommen, in der gewünschten Weise gewechselt, wieder eingesetzt und das Ritzel erneut montiert werden. Dieses Problem taucht insbesondere auch dann auf, wenn eine durchgehende Schubstange verwendet wird, die nicht in den Führungskanal eines vormontierten Schloßkastens einfach einschiebbar ist. Falls die an der Stange angeordneten Verriegelungseinrichtungen durch Einschnitte in der Stange gebildet werden, wie es bei Anwendung des Stangenverschlusses offenbar vorgesehen ist, siehe die EP-A 0 176 890, wird es zudem schwierig, die Stangen sowohl links wie auch rechts zu verwenden, weil die dann notwendigen beidseitigen Einschnitte in der aus Flachmaterial bestehenden Stange eine zu starke Schwächung der Stange bewirken könnten. Außerdem ist die Führung einer derartig beidseitig mit Einschnitten versehenen Stange schwierig.

Aufgabe der Erfindung ist es, einen Schwenkhebelverschluß gemäß der eingangs genannten Art zu schaffen, der die Vorteile beider Konstruktionsprinzipien vereinigt, also sowohl ausreichend schmal ist, um auch im Bedarfsfall im Verkantungsraum einer Blechschranktür unterbringbar zu sein und auch eine verschwenkungsfreie Schubstangenverschiebung erlaubt, und trotzdem keine zusätzlichen Bohrungen – neben den beiden vorzugsweise gleich großen und vorzugsweise rechteckigen Durchbrüchen – für die Befestigung am Türblatt erfordert. Zudem sollte die Konstruktion so getroffen sein, daß der Stangenverschluß weiterhin sowohl für links als auch für rechts anschlagende Schaltschranktüren verwendbar ist, wobei auch eine nachträgliche Änderung ohne umständliche Demontagearbeiten möglich sein sollte und ohne daß dabei eine zu starke Schwächung von aus Flachmaterial bestehenden Stangen auftritt.

Der Antrieb der Flachstangen sollte zudem möglichst axial vorgenommen werden, um unerwünschte, die Reibung erhöhende Verkantungen in den Stangenführungen auszuschließen. Des weiteren sollte der Stangenverschluß aus möglichst wenig Teilen bestehen, möglichst leichtgängig sein und ein leichtes Schließen selbst dann zulassen, wenn die Verriegelungseinrichtungen aufgrund von zwi-

schen Türrahmen und Türblatt vorgesehenen Dichtungseinrichtungen eine große Auflaufschräge aufweisen müssen.

Gelöst wird die Aufgabe dadurch, daß die zumindest eine Verschlußstange aus Flachbandmaterial gefertigt ist und durch den Schloßkasten einstückig hindurchreicht, daß der andere Ansatz ein Teil des Schloßkastens ist und daß dieser andere Ansatz zusammen mit einem weiteren Teil des Schloßkastens das Türblatt im Bereich des ersten Durchbruchs zentrierend einklemmt.

Durch diese Maßnahmen gelingt es, den bekannten Schwenkhebelverschluß soweit abzuwandeln, daß er bei Bedarf auch im Verkantungsraum einer Blechschranktür untergebracht werden kann, daß er weiterhin eine Schubstangenverschiebung erlaubt, die verschwenkungsfrei ist und daher die Lagerung der Schubstangen an mehreren Stellen ermöglicht und daß weiterhin lediglich die beiden vorzugsweise gleich großen und vorzugsweise rechteckigen Durchbrüche für die Befestigung im Türblatt erforderlich sind. Auch nachträgliche Änderungen sind ohne Schwierigkeiten möglich, welche Änderungen beispielsweise bei der Umstellung von Schaltschränken erforderlich werden können. Ein großer Vorteil der erfindungsgemäßen Konstruktion ist außerdem der, daß sie in eine Serie von unterschiedlichen Schloßkonstruktionen eingepaßt werden kann, die jeweils von den zwei Rechteckdurchbrüchen, die für den Schwenkhebelverschluß vorgesehen sind, Gebrauch machen, so daß bei Bedarf der Schwenkhebelverschluß auch gegen andere Verschlußeinrichtungen ausgewechselt werden kann, ohne daß dann nicht mehr benötigte Zusatzlöcher abgedeckt, abgedichtet oder sonstwie beseitigt werden müßten.

Ein weiterer Vorteil ist, daß das Antriebsritzel für die Schubstangen wie auch das für dieses Ritzel eine Lagerung darstellende Teil des Verschlusses eine besonders günstige Form annehmen können. So ist es möglich, die eine Verschlußstange (oder die zwei Verschlußstangen) sowie ein die Stange(n) im Bereich des Schlosses führendes Schloßnuß- und Stangenlager jeweils derart symmetrisch bzw. doppelt symmetrisch auszuführen, daß ohne Demontage des Ritzels der Stangenverschluß durch Wenden bzw. Vertauschen der Stange(n) und/oder Wenden des Schlosses sowohl für rechts wie für links anschlagende Türen bei prinzipiell beliebig wählbarer Öffnungsdrehrichtung der Schloßbetätigungseinrichtung eingesetzt werden kann. Dadurch wird erreicht, daß der Schwenkhebelverschluß außerordentlich vielseitig einsetzbar ist, besonders einfach montiert und demontiert werden kann und infolge der Identität der Stangen auch in der Herstellung besonders billig ist. Durch die erfindungsgemäße Konstruktion wird auch ein axialsymmetrischer Kraftangriff an die Stangen ermöglicht, wodurch Verkantungsvorgänge vermieden werden, was zu einer größeren Leichtgängigkeit des Verschlusses führt. Verwendet man, wie ebenfalls noch beschrieben wird, sogenannte Doppelrollzapfen an den Stangen, wird diese Leichtgängigkeit noch ausgeprägter und es wird insbesondere möglich, auch einen größeren Schließweg aufzunehmen, wie er bei Schaltschranktüren vorkommen kann, der mit Dichtungseinrichtungen zwischen Türblatt und Türrahmen versehen sind. Ein weiterer Vorteil ist noch der, daß der Verschluß trotz vielseitiger Anwendbarkeit aus nur wenigen Einzelteilen besteht, was ebenfalls einer Verbilligung der Herstellung und einer Vereinfachung der Montage zugute kommt.

Der Ansatz für Aufnahme des Zylinderschlosses kann einen mit ihm einstückig hinterschnittenen Vorsprung zum einfachen "Einhaken" der Grundplatte in dem zugehörigen Durchbruch während des Montagevorganges aufweisen. Statt dessen können aber auch ein oder zwei zusätzliche winkel-, bügel- oder kappenförmige Halteteile aufschraubbar sein.

Die Umstellbarkeit wird erleichtert, wenn gemäß einer noch anderen Ausbildung der Erfindung der Schloßkasten ein Ritzel zum Antrieb von perforierten oder gezahnten, aus Flachbandmaterial bestehenden Verschlußstangen, die in dem Schloßkasten axial verschieblich gelagert sind, sowie eine das Ritzel tragende, in einem Schloßnuß- und Stangenlager drehbar gehaltenen Schloßnuß umfaßt, die mittels durch den ersten Durchbruch nach außen geführter und den Schwenkhebel tragender Betätigungswelle verdrehbar ist, wobei erfindungsgemäß das Schloßnuß- und Stangenlager des Schlosses des Schwenkhebelstangenverschlusses ein von der Grundplatte gebildetes Basisteil aufweist, das das eine Ende der Schloßnuß lagert, sowie ein auf das Basisteil aufsetzbares und mit diesem mittels Schrauben o. dgl. verbindbares Kappenteil, das das andere Ende der Schloßnuß lagert und das, ggf. zusammen mit dem Basisteil, vier Führungsschlitze für die Stange(n) bildet.

Est ist günstig, wenn das Kappenteil im Kappenboden eine zentrale Öffnung für die Lagerung der Schloßnuß und je ein ober- und unterhalb der zentralen Öffnung angeordnetes, in das Kappeninnere ragendes Auge mit einer eingesenkten Bohrung zur Aufnahme einer Befestigungsschraube aufweist. Auf diese Weise läßt sich das Kappenteil zum Zwecke der Auswechslung von beispielsweise der Stange, aber auch zum Auswechseln der Art der Betätigungseinrichtung leicht demontieren.

Besteht das Schloßnuß- und Stangenlager aus einem Basisteil und einem Kappenteil von im wesentlichen identischem Aufbau, ergeben sich weitere Herstellungsvereinfachungen, und damit Kosteneinsparungen.

Montagevereinfachungen ergeben sich, wenn durch in weiteren Unteransprüchen geschilderte Maßnahmen Basisteil und Kappenteil gegenseitige Führungen aufweisen.

In noch weiteren Unteransprüchen werden Maßnahmen geschildert, die eine weitere Platzeinsparung bewirken und den Stangenverschluß noch geeigneter für beispielsweise die Unterbringung im Verkantungsraum einer Blechschranktür machen.

Durch die besondere Konstruktion des erfindungsgemäßen Verschlusses kann das Basisteil, das Teil eines Schwenkhebelverschlusses ist, durch ein Teil ersetzt werden, das Teil eines Handhebelverschlusses, eines Doppelbartverschlusses oder auch eines andersartigen Verschlusses ist.

Daher kann bei Bedarf der versenkbare Verschluß, ggf. nur zeitweise, durch einen anderen Verschluß ersetzt und dann. u. U. wieder der alte Zustand wieder hergestellt werden, wobei ggf. nur ein einziges Teil des gesamten Verschlusses ausgetauscht werden muß. Eine derartige Möglichkeit bietet der Stand der Technik nicht.

Weitere Unteransprüche betreffen abdichtbare Ausführungsformen sowie eine Ausführungsform, bei der bei bestimmten Anwendungen noch eine Zunge am Schloßkasten zusätzlich angebracht werden kann.

Die Erfindung wird nachfolgend anhand von Ausführungsbeispielen näher erläutert, die in den Ziechnungen dargestellt sind.

Es zeigt:

Fig. 1 in einer Axialschnittansicht, die einem Schnitt entlang der Linie B-B einer noch aufzuführenden Fig. 2 entspricht, eine Ausführungsform des erfindungsgemäßen Schwenkhebelverschlusses;

Fig. 2 eine Ansicht dieses Verschlusses in Richtung des Pfeiles X der Fig. 1;

Fig. 3 zur Erläuterung der Kompatibilität des erfindungsgemäßen Schwenkhebelverschlusses mit anderen Verschlußarten eine Axialschnittansicht ähnlich der Fig. 1, wobei jedoch die Schwenkhebeleinrichtung durch eine Steckschlüsseleinrichtung ersetzt und der nicht mehr benötigte rechteckige Durchbruch durch eine Abdeckplatte verschlossen ist, wobei jedoch die übrigen Teile unverändert bleiben;

Fig. 4 einen Blick von hinten auf eine Blechschranktür in deren Verkantungsraum mit in diesen Verkantungsraum eingebautem Verschluß gemäß Fig. 3 zur Erläuterung der Anordnung der Stangen mit zugehörigen Führungs- und Verschlußeinrichtungen;

Fig. 5 eine Schnittansicht entlang der Linie A-A der Fig. 4 zur weiteren Erläuterung der Stangenanordnung sowie der Türblattkonstruktion, für die der erfindungsgemäße Schwenkhebelverschluß besonders gut geeignet ist;

Fig. 6 einen Schnitt entlang der Pfeile C-C der Fig. 4 zur Erläuterung einer geeigneten Verriegelungseinrichtung mittels Doppelrollzapfenanordnung;

Fig. 7 einen Schnitt entlang der Pfeile D-D der Fig. 4 zur Erläuterung einer geeigneten Stangenführung;

Fig. 8 eine Ansicht von außen auf eine Tür mit eingebautem Stangenverschluß, bei dem die Betätigungseinrichtung in Uhrzeigerrichtung zu betätigen ist;

Fig. 9 eine entsprechende Ansicht wie Fig. 8, jedoch mit einer Schwenkhebelbetätigung, die entgegen dem Uhrzeigersinn zu betätigen ist, wobei die entsprechend unterschiedlich angeordnete Verschlußstange gestrichelt dargestellt ist;

Fig. 10 in Draufsicht eine doppeltsymmetrische Verschlußstange;

Fig. 11 die Stange der Fig. 10 in einer Seitenansicht;

Fig. 12 eine Stange gemäß Fig. 11 wobei jedoch ein Ende abgeschnitten ist;

Fig. 13 in drei Ansichten die Stange gemäß Fig. 10 und 11, jedoch mit montiertem Doppelrollzapfen als Verriegelungsorgan sowie montiert im Betätigungsschloß, einmal für Linksbetrieb und einmal für Rechtsbetrieb;

Fig. 14 in vier verschiedenen Ansichten das Basisteil des in Fig. 1 dargestellten Schwenkhebelverschlusses gemäß einer ersten Ausführungsform der Erfindung;

Fig. 15 in einer weiteren Ansicht eine abgewandelte Ausführungsform des Basisteils;

Fig. 16 in vier verschiedenen Ansichten das zum Basisteil der Fig. 14 gehörende Kappenteil in vier verschiedenen Ansichten;

Fig. 17 in zwei Ansichten das gemäß Fig. 1 verwendete und zum Basisteil gemäß Fig. 14 gehörende Ritzel des erfindungsgemäßen Schwenkhebelverschlusses;

Fig. 18 in zwei Ansichten einen in das Ritzel gemäß Fig. 17 einlegbaren Steckschlüsseleinsatz, um zur Ausführungsform gemäß Fig. 3 zu gelangen;

Fig. 19 in drei Ansichten den beim Schwenkhebelverschluß gemäß Fig. 1 verwendeten und in das Basisteil gemäß Fig. 14 passenden Ritzeleinsatz zum Anlenken des Schwenkhebels;

Fig. 20 einen in vier Ansichten entsprechenden passenden Schwenkhebel;

Fig. 21 in einer Ansicht von hinten den montierten Schwenkhebelverschluß gemäß Fig. 1 zur Darstellung einer zusätzlichen Kröpfung der Betätigungsstange bei diesem Anwendungsfall, wobei die beiden Rechteckdurchbrüche nochmals getrennt dargestellt sind;

Fig. 22 in je zwei Ansichten die beiden für die Anordnung der Doppelrollzapfen auf den Betätigungsstangen benötigten Bauteile;

Fig. 23 in drei verschiedenen Ansichten eine weitere Ausführungsform des erfindungsgemäßen Schwenkhebelstangenverschlusses mit noch stärker symmetrierter Schloßnuß- und Stangenlagereinrichtung;

Fig. 24 in vier Ansichten das Kappenteil des Verschlusses gemäß Fig. 23;

Fig. 25 in vier Ansichten das innere Basisteil des Verschlusses gemäß Fig. 23;

Fig. 26 einen zusammengebauten Schwenkhebel aus den Einzelteilen der Fig. 15, 20 und 23;

Fig. 27 in einer ähnlichen Darstellung wie Fig. 14 das Basisteil für eine andere, schmalere Ausführungsform des erfindungsgemäßen Schwenkhebelverschlusses;

Fig. 28 in einer ähnlichen Darstellung wie Fig. 20 einen zum Basisteil von Fig. 27 passenden Schwenkhebel;

Fig. 29 in vier verschiedenen Ansichten einen die Teile von Fig. 27 und 28 benutzenden Stangenverschluß mit Winkelbefestigung und einer durchlaufenden Stange;

Fig. 30 in drei Ansichten einen anderen die Teile von Fig. 27 (leicht abgeändert) und 28 benutzenden Stangenverschluß mit Kappenbefestigung und zwei gegenläufigen Stangen, wobei die eine einen Kupplungsteil aufweist;

Fig. 31 in drei Ansichten einen noch anderen die Teile von Fig. 27 (leicht abgeändert) und 28 benutzenden Stangenverschluß mit Kappenbefestigung und am Schloßkasten zusätzlich angeordneter Zunge, zur Montage außerhalb des Abkantungsraums einer Blechschranktür;

Fig. 32 in view Ansichten die in Fig. 30 und 31 benutzte Befestigungskappe mit Ausbauchung für den Zylinderschloßdaumen;

Fig. 33 in mehreren Ansichten das Stangenkupplungsteil der Fig. 30; und

Fig. 34 in zwei Ansichten ein in den Ausführungsformen gemäß Fig. 23, 29, 31 verwendetes Ritzel.

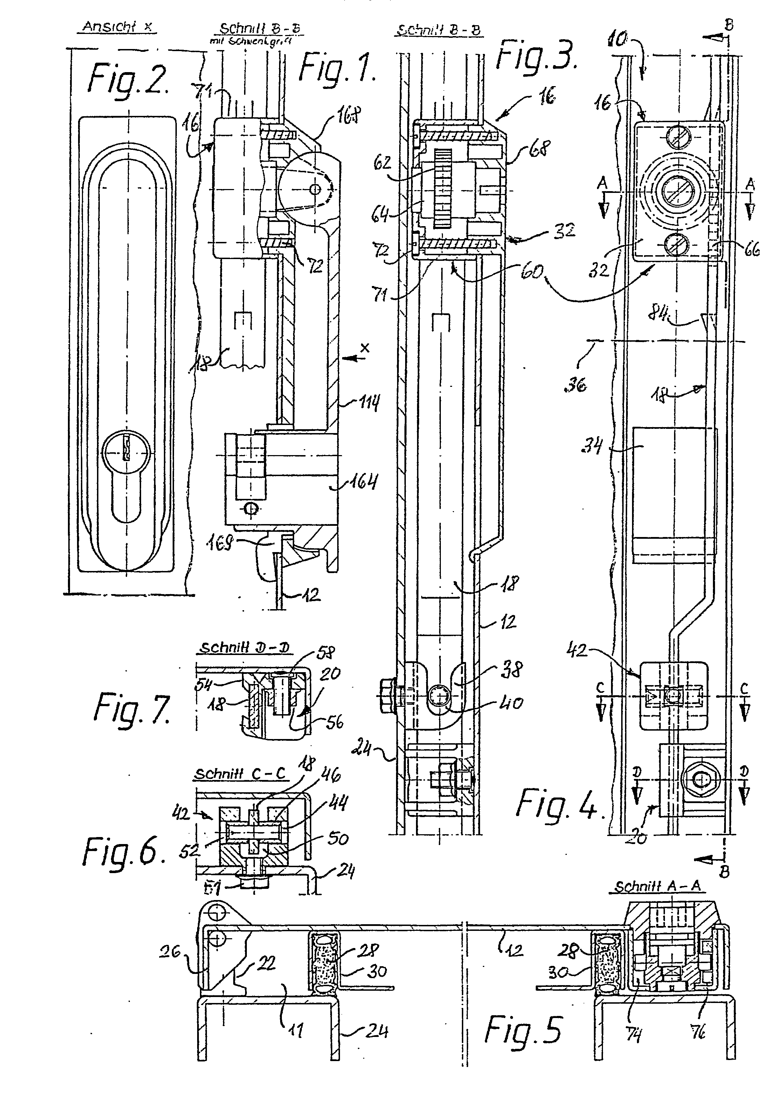

Es sei zunächst auf Fig. 4 eingegangen. Diese Fig. 4 zeigt in einer Ansicht auf Verkantungsraum 10 einer Blechschranktür 12 einen in diesem Raum angeordneten Stangenverschluß 14, bestehend aus einem Schloß 16, von dem eine im Verkantungsraum 10 verlaufende Stange 18 ausgeht, die zum einen innerhalb des Schlosses 16, zum anderen aber auch am Türblatt 12 in einer Stangenführung 20 verschieblich gelagert ist.

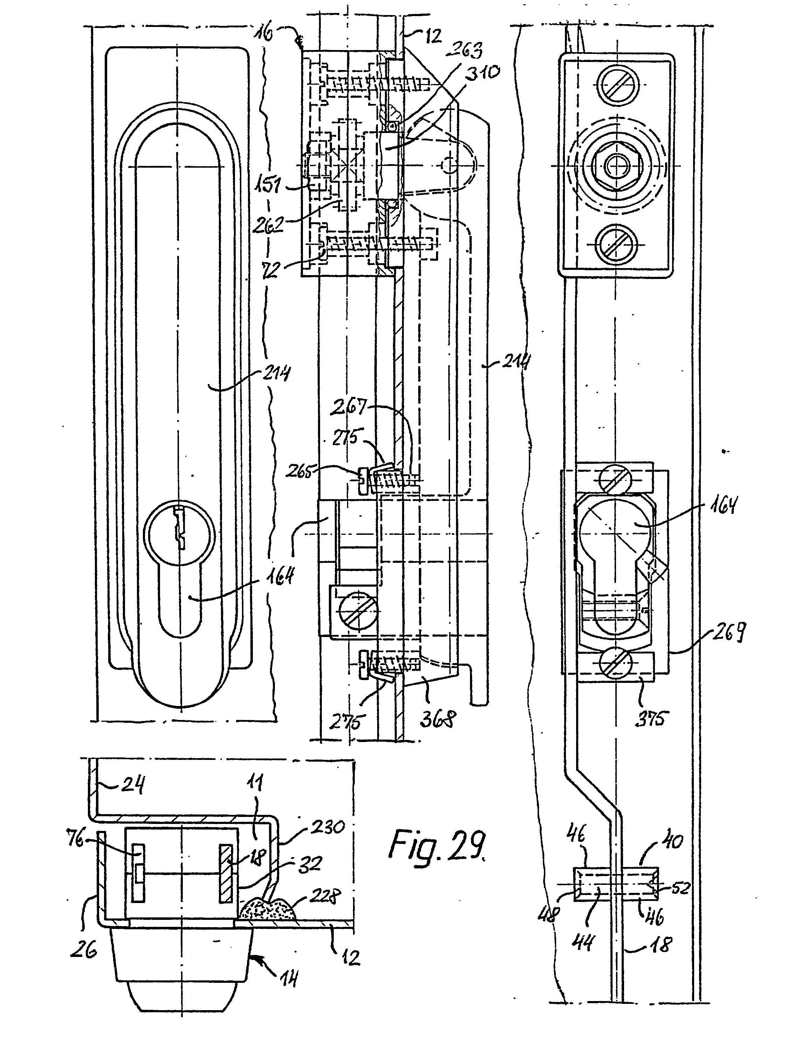

Die Blechschranktür 12 ist über Scharnierbänder 22, siehe Fig. 5, am Schrankkorpus 24 angelenkt, die ihrerseits den anderen Verkantungsraum 11 ausnutzen, der zwischen der äußeren Abkantung 26 und einem innen auf das Türblatt aufgeschweißten, eine Dichtung 28 aufnehmenden Profilblech 30 oder durch eine gegen eine Dichtung 228 sich anlegende Abkantung 230 des Schrankkorpus 24, siehe Fig. 29, gebildet ist. Üblicherweise ist in Blechschränken, die derartige Verkantungsräume 10, 11 besitzen, in dem Verkantungsraum für den Verschluß ein rechteckiger Durchbruch 32 bzw. 34 angeordnet, bei geplanter Anwendung von versenkbaren Schwenkhebelverschlüssen sind es zwei derartige symmetrisch zur horizontalen Türmitte 36 angeordnete Rechteckdurchbrüche 32 und 34.

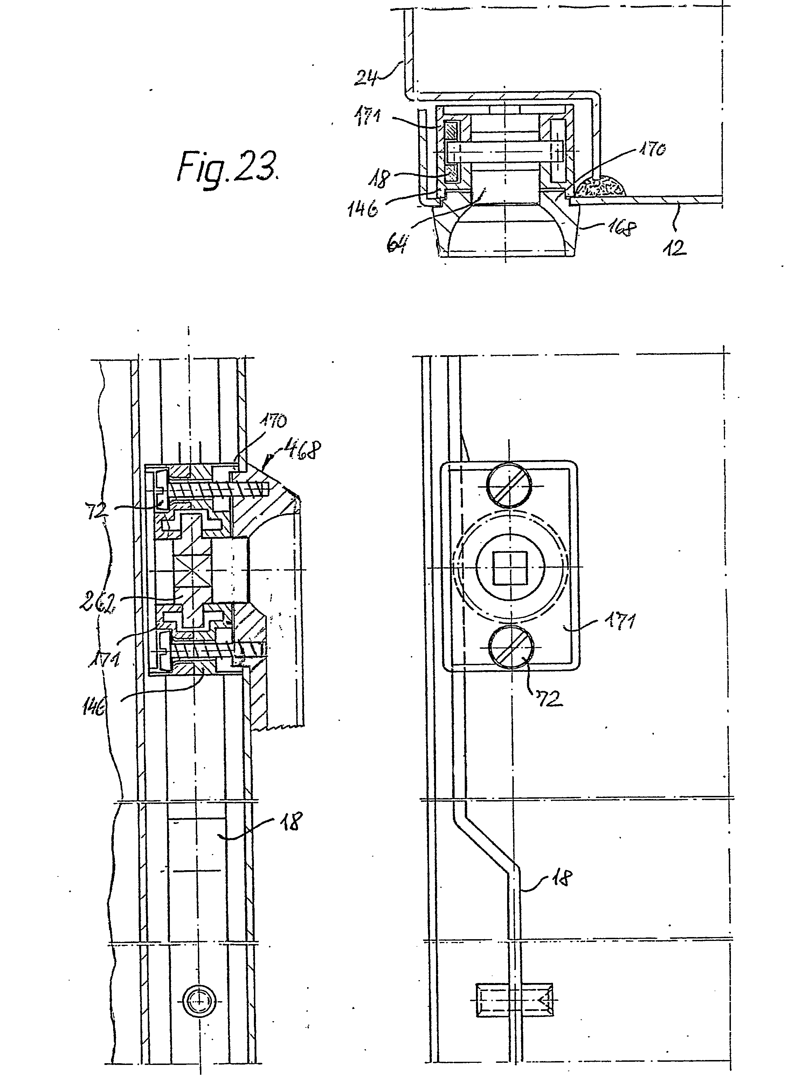

Wie aus Fig. 3, einer axialen Schnittansicht entlang der Linie B-B der Fig. 4 zu erkennen ist, ist am Schrankkorpus 24 ein hakenartiger Vorsprung 38 angeschraubt, in den beim Schließen des Stangenverschlusses ein von der Verschlußstange 18 getragener Doppelrollzapfen 40 eindringt und so eine Verriegelung 42 bildet. In der Schnittansicht C-C durch diese Verriegelung, siehe Fig. 6, ist zu erkennen, daß die im Querschnitt rechteckförmige und aus Flachbandmaterial gebildete Stange 18 einen Stift 44 in Preßpassung trägt, siehe auch Fig. 22 und Fig. 29, der beidseitig Rollen 46 trägt. Die Rollen haben soviel Spiel, daß sie leicht drehbar sind, aber von dem Stift 44 nicht abgleiten, dies aufgrund eines Kopfes 48 auf der einen Seite des Stiftes 44, und einer Aufbördelung 52, die nach Montage auf Stift und Rollen an der gegenüberliegenden Seite des Stiftes erzeugt wird.

Der Haken 38 ist mit einem Schlitz 50 zur Aufnahme der Stange 18 versehen, wobei im Schnitt C-C der Fig. 6, der Haken eine U-Form erkenen läßt, wobei der Steg des U eine Gewindebohrung aufweist, in die eine Befestigungsschraube 51 eingeschraubt werden kann, um den Haken festzulegen. Der Haken kann noch eine Drehsicherung aufweisen, beispielsweise in Form eines prismatischen Durchbruchs im Schrankkorpus 24, in den sich entsprechende Vorsprünge des Hakens drehsichernd einsenken.

Eine Möglichkeit zur Stangenführung ist im Schnitt D-D der Fig. 4 wiedergegeben, siehe Fig. 7, wobei die Stangenführung 20 hier mittels einer Stehbolzenanordnung im Eckraum des Abkantraums 10 drehgesichert angeordnet und so gestaltet ist, daß die Flachbandstange 18 durch vorheriges Wegbiegen eines Vorsprungs 54 in die Führung eingeschoben werden kann, wonach dann die Befestigungsmutter 56 des Schweißbolzens 58 festgezogen werden kann, wodurch sich der Vorsprung 54 sichernd gegen die Stange 18 drückt.

Aus Fig. 3 geht hervor, daß das Schloß 32 ein Schloßnuß- und Stangenlager 60 umfaßt, das eine ein Ritzel 62 tragende Schloßnuß 54 drehbar hält. Die Schloßnuß 64 ist mit Hilfe einer durch das Türblatt 12 nach außen geführten Betätigungseinrichtung, wie hier insbesondere Schwenkhebel, siehe Fig. 1, aber auch Steckschlüssel, siehe Fig. 3, o. dgl. verdrehbar, wobei das Ritzel, das in entsprechende Perforierungen oder Zahnungen 66 der Stange 18 eingreift, diese auf- und abschiebt.

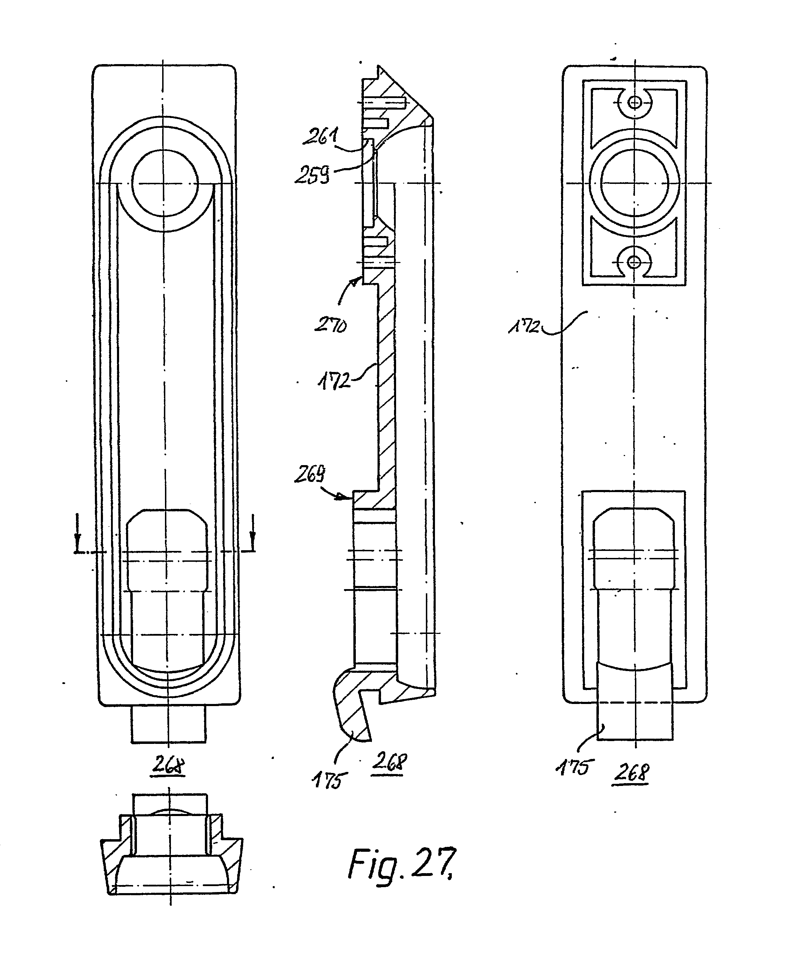

Das Schloßnuß- und Stangenlager 60 besteht gemäß der Darstellung von Fig. 3 aus einem Basisteil 68 und gemäß Fig. 1 aus einem Basisteil 168 (weitere Ausführungsformen 268, 368 und 468 zeigen Fig. 27, 29, 15), in welches Basisteil das eine Ende der Schloßnuß 64 lagert, und aus einem auf das Basisteil 68 bzw. 168 aufsetzbaren Kappenteil 71, das mittels Schrauben 72 am Basisteil festgelegt ist und das andere Ende der Nuß lagert. Wie aus der Schnittdarstellung A–A, Fig. 5, hervorgeht, bildet das Schloßnuß- und Stangenlager 60 auch Führungsschlitze 74 und 76 zum wahlweisen Einlegen der Stange 18 entweder in der dargestellten Weise, bei der die Schließrichtung dem Uhrzeigersinn folgt, oder im Kanal 74, bei der eine umgekehrte Schließrichtung für die Betätigungseinrichtung sich ergibt.

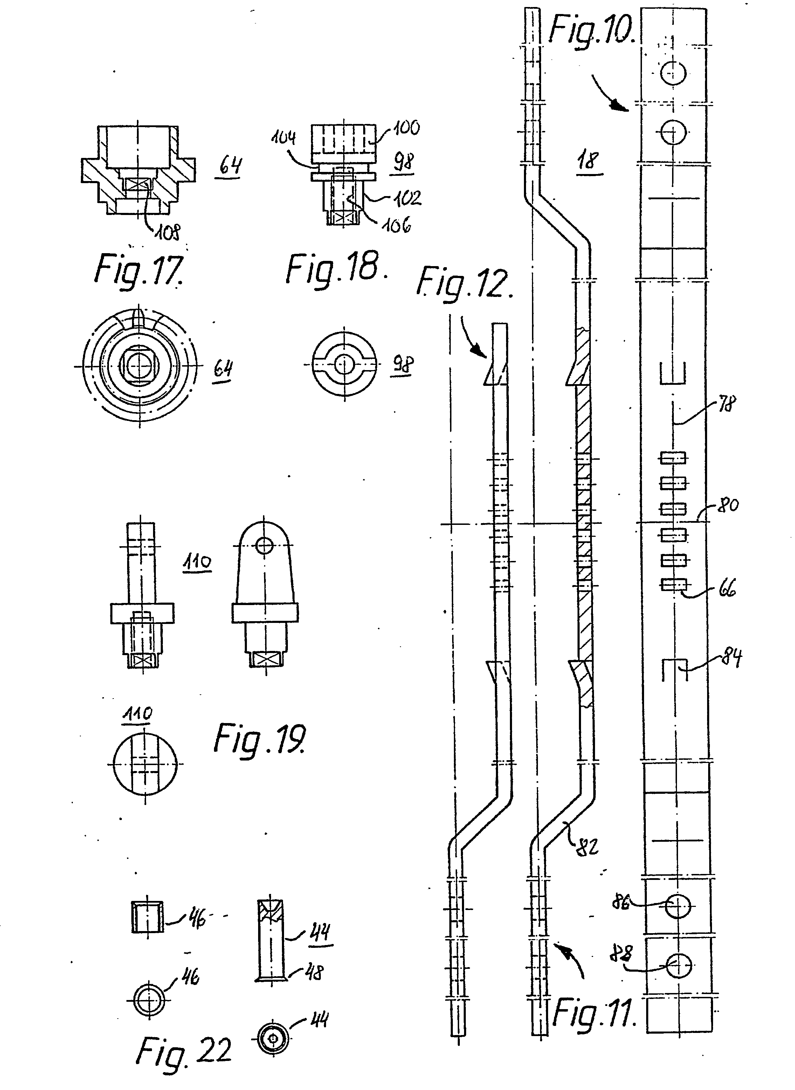

Um dieses Wenden der Stange 18 und auf diese Weise eine Änderung der Drehrichtung hinsichtlich der Betätigungseinrichtung zu ermöglichen, ohne sonstige Änderungen vornehmen zu müssen, ist die Stange 18, siehe auch die Fig. 10 und 11, hier zweifach axialsymmetrisch ausgeführt, nämlich einmal um die Longitudinalachse 78, zum anderen um die Querachse 80. Die Symmetrie erfaßt ggf. auch ausgestanzte Anschlagnasen 84, die sich an die Außenfläche des Schlosses 16 legen und dadurch den Bewegungsweg der Stange begrenzen, wie auch die Verkröpfungen 82, die den Freiraum für die Anordnung des Ritzels 62 ergeben. Ebenso betroffen von der Symmetrie sind hier die Bohrungen 86, 88, die zur Anordnung der bereits beschriebenen Doppelrollzapfen 40 vorgesehen sind.

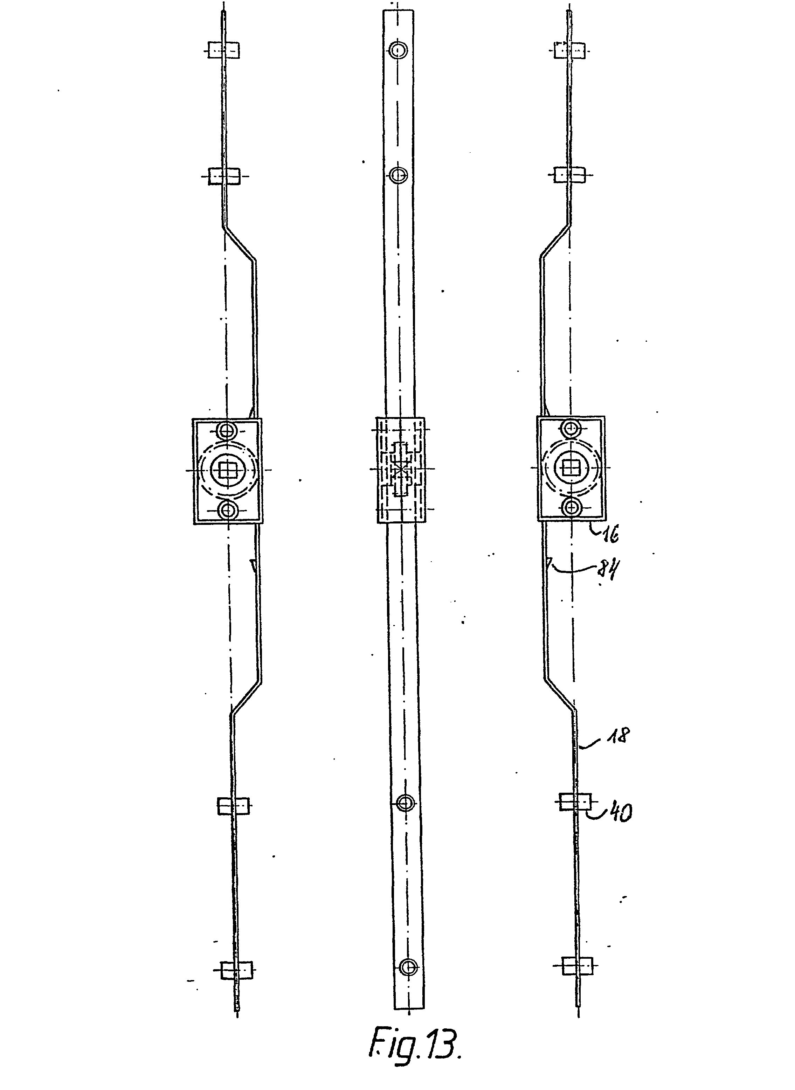

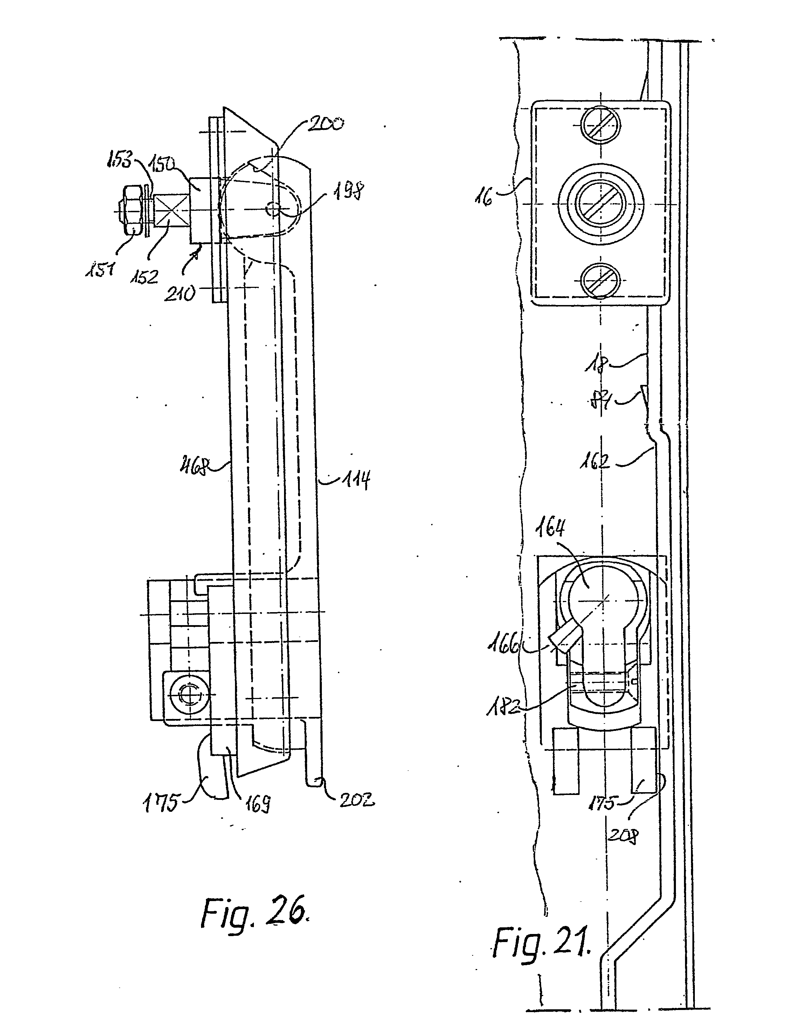

In Fig. 13 sind die beiden beschriebenen Anordnungen der Stange 18 dargestellt, wobei auch die montierten Doppelrollzapfen 42 zu erkennen sind. Andere Formen der Stange zeigen Fig. 21, 30 und 31.

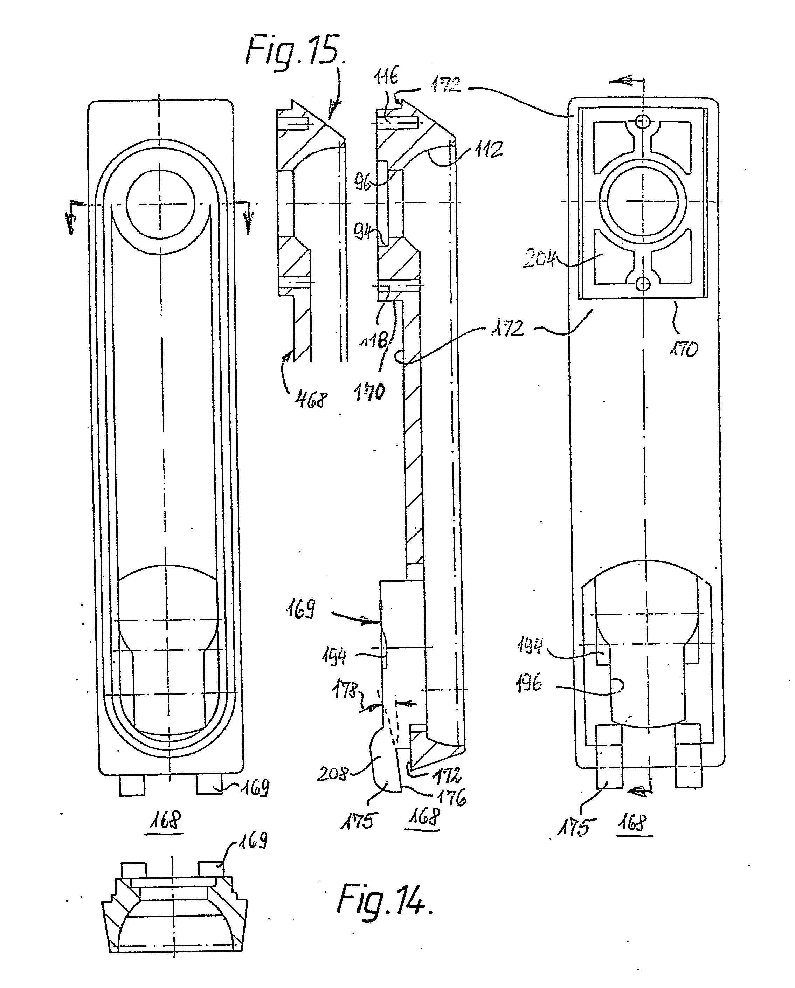

Das Basisteil 168 des Schwenkhebelverschlusses gemäß Fig. 1 ist in Fig. 14 in einer Draufsicht, einer Axialschnittansicht, einer Ansicht von hinten und in einer Querschnittsansicht dargestellt. Dieses Basisteil 168 stellt die Grundplatte des Schwenkhebelverschlusses gemäß einer ersten Ausführungsform dar. Die in Fig. 14 dargestellte Grundplatte 168 weist einen einen der Rechteckdurchbrüche, z.B. 34, durchgreifenden Ansatz 169 auf, der sich mit einem dazu einstückigen Halteteil 175 an der unteren Kante dieser Öffnung anlegt und hintergreift. Der Ansatz 169 wie auch der am anderen Ende der Grundplatte 168 vorspringende Teil des Schloßkasten 16 bildende Ansatz 170 durchgreifen nicht nur die beiden Durchbrüche 32, 34, sie legen sich auch in bestimmten Bereichen der Durchbrüche 32, 34 zentrierend an und legen dadurch die Grundplatte innerhalb des Türblatts 12 in den zum Türblatt parallelen Richtungen fest. Die Festlegung der Grundplatte 168 und damit des gesamten Schwenkhebelverschlusses in der zur Türblattebene senkrechten Richtung erfolgt am die Schwenkhebelwelle aufweisenden Ende durch das Aufschrauben des Kappenteils 71, so daß das Türblatt 12 zwischen die Auflagefläche 172 der Grundplatte und dem Umfangsrand 174 des Kappenteils 71 eingeklemmt wird, während am anderen Ende der Grundplatte 168 die Einklemmung zwischen wiederum der Fläche 172 sowie dem Spitzenbereich 176 der beiden Halteteile 175 erfolgt. Die diesen Spitzenbereich 176 bildende Hinterschneidung der Halteteile 175 erfolgt schräg mit einem Winkel 178, der annähernd dem Winkel entspricht, mit dem die Grundplatte 168 - aufgrund des Ansatzes 170 für den anderen Durchbruch - während des Einschiebens schräg gehalten werden muß. Beim Einschwenken und Durchstecken des Ansatzes 170 legt sich dann der Spitzenbereich 176 fest an das Türblattblech und verklemmt die Grundplatte 168 fest mit dem Türblatt 12. Die Form der Grundplatte 168 ist dabei so getroffen, daß die Durchbrüche 32, 34 vollständig abgedeckt werden, so daß ggf. durch Zwischenlage eines Dichtungsblattes sogar eine Abdichtung zwischen der Auflagefläche der Grundplatte und der entsprechenden Außenfläche des Türblatts möglich ist.

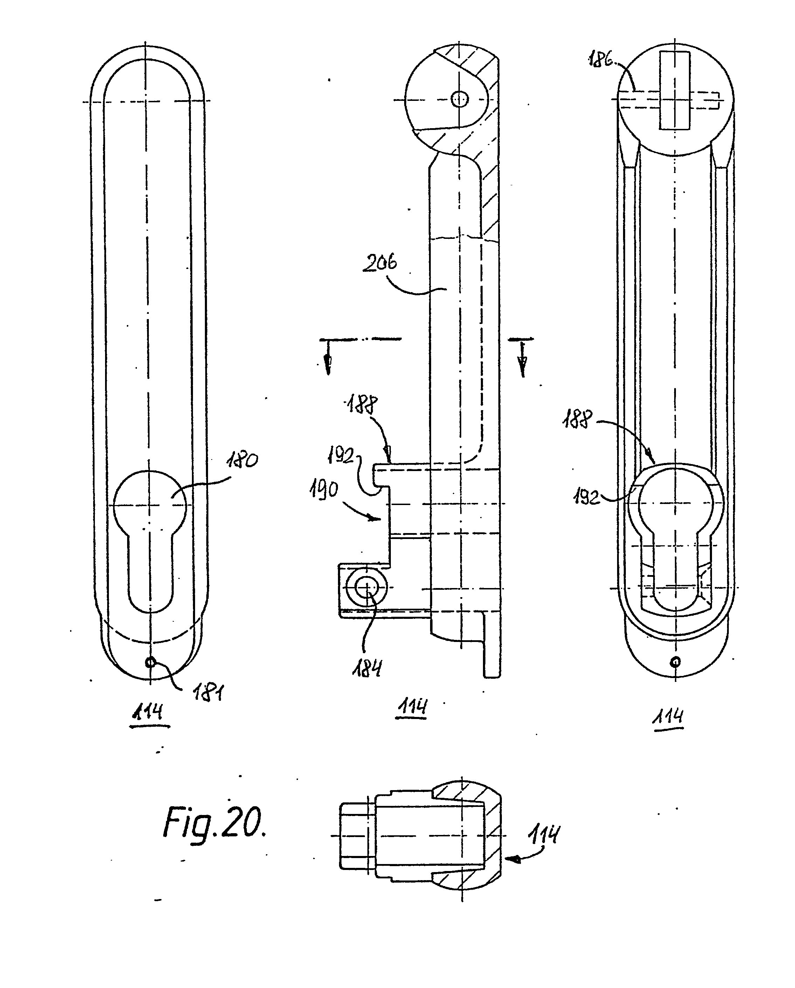

Zur Lagerung der Schloßnuß 64 dient eine kreisförmige Einsenkung 94, während ein Durchbruch 96 verkleinerten Durchmessers zur Aufnahme des den Schwenkhebel 114 lagernden Einsatzes 110 (Fig. 19) dient. (In vorteilhafter Weise kann alternativ auch z. B. ein Doppelbartschlüsseleinsatz 98, siehe Fig. 18, mit seinem Kopf 100 in dem Ritzel 64, das auch in Fig. 17 dargestellt ist, aufgenommen werden, welcher Doppelbartschlusseleinsatz 98 mit einem weiteren Teil dieses Kopfes, der auch eine Umfangsnut 104 zur Aufnahme einer eventuellen O-Ringdichtung besitzt, sowie mit einem Fußteil 102 in dem Ritzel 64 drehstarr gelagert werden und mit Hilfe einer hier nicht dargestellten Schraube, die in ein Sackgewindeloch 106 eingeschraubt werden kann, mit Hilfe einer Vierkantsteckverbindung 108 eine drehstarre Verbindung zwischen diesen beiden Bauteilen 64 und 98 ermöglicht. Der Voreteil dieser mehrstückigen Bauweise ist der, daß der Einsatz jeweils nach Bedarf austauschbar ist, so daß das Ritzel 64 für ganz verschiedene Schlüsselarten benutzt werden kann.) Für den hier in Rede stehenden Schwenkhebelverschluß dient der bereits erwähnte Schwenklagereinsatz 110, der mit dem zugehörigen Ritzel 64 dann in das Basisteil 168 eingesetzt werden kann, das wiederum neben der Einsenkung 94 under der Lagerfläche 96 eine Kugelfläche 112 zur Lagerung des Schwenkhebels 114 gemäß Fig. 20 besitzt.

Das Basisteil 168 wird üblicherweise aus Kunststoff gespritzt sein und in diesem Falle eingespritzte Sackbohrungen 116 bzw. Durchgangsbohrungen 118 aufweisen, in die die Befestigungsschrauben 72 sich ihr eigenes Gewinde schaffend einschneiden. Spritzt man die Teile aus Metall, wird man entsprechende Gewindesack- bzw. Durchgangslöcher vorsehen.

Auch den in Fig. 20 dargestellten Schwenkhebel 114 wird man zweckmäßigerweise aus Kunststoff spritzen, um so eine zusätzliche Isolierwirkung gegenüber Spannungsverschleppung aus dem Inneren des Schaltschrankes nach außen zu erlangen.

Auch die Stangenführung 20 wird man zweckmäßigerweise aus einem Kunststoff spritzen, während der Haken 38 wegen der höheren Belastung meist aus Metall gefertigt sein wird. Der Kunststoff ermöglicht eine im wesentlichen abnutzungsfreie und wenig Reibungskräfte erfordernde Gleitlagerung, die infolge der Doppelrollenzapfenverriegelung zudem frei von Verkantungskräften bleibt und daher für einen leichtgängigen, wendbaren Verriegelungsmechanismus sorgt. Es wird auch deutlich geworden sein, daß für den Beschlag nur ganz wenige Teile erforderlich sind. Durch entsprechende Gestaltung des Hakens 38 mit beispielsweise einer großen Schrägung können auch Türen mit stark auftragenden Dichtungen 28, 228 sicher geschlossen werden.

Wird nur eine einzige Stange 18 verwendet, wird man die Haken 38 alle in eine Richtung wenden, während bei der Verwendung von zwei Stangen zur gegenläufigen Betätigung, was eine Entlastung der Türscharniere bewirkt, die Haken für die eine Stange eine andere Ausrichtung besitzen, als die Haken für die andere Stange. Der Vorteil dieser Doppelstangenanordnung ist der, daß die bei der Türbetätigung auftretenden Reibungskräfte sich gegenseitig am Türblatt aufheben und somit keine Kräfte vom Türblatt auf den Türrahmen übertragen weden müssen. Diese Reibungskräfte sind jedoch bei der Verwendung von Doppelrollzapfen, wie es hier vorgesehen ist, relativ klein, so daß auch die Verwendung nur einer Betätigungsstange ohne Schwierigkeiten möglich ist.

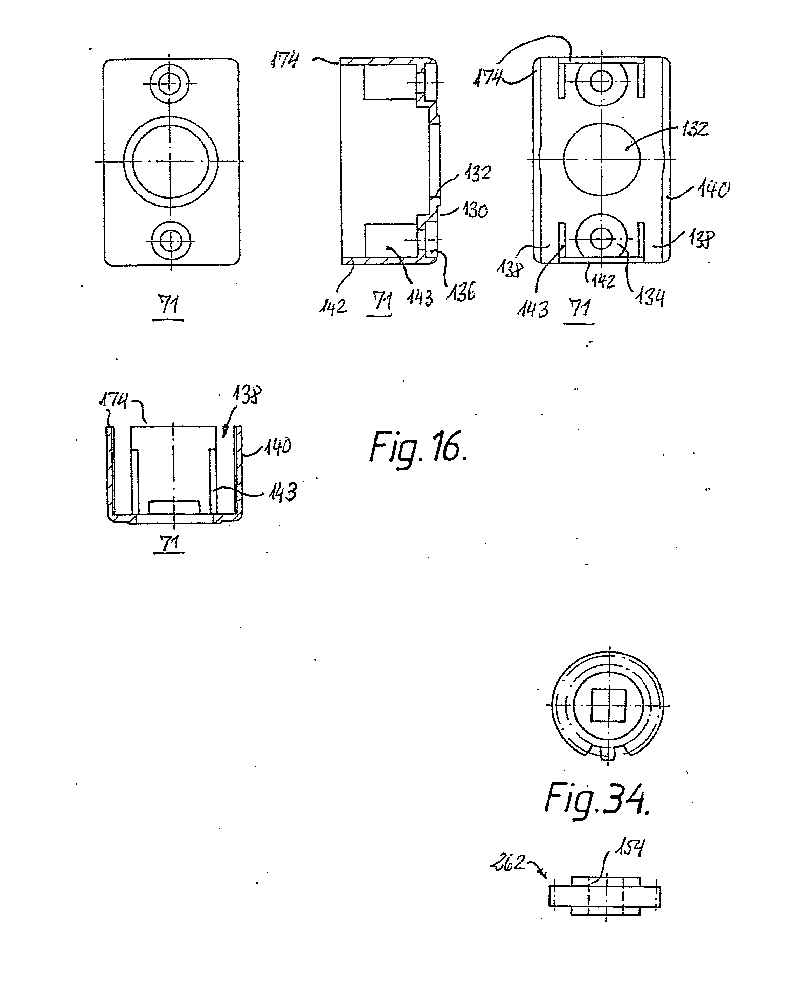

Es sei nun näher auf das in Fig. 16 dargestellte Kappenteil 70 eingegangen, das nach Einsetzen des Basisteils 168 in die Durchbrüche 32, 34 des Türblattes 12 und nach Einsetzen der gewünschten Art von Ritzel 64, Lager 110 und Schwenkhebel 114 sowie nach entsprechender Anbringung zugehöriger Betätigungsstangen 18 aufgesetzt werden kann. Das in Fig. 16 dargestellte Kappenteil 71 weist im Kappenboden 130 eine zentrale Öffnung 132 für die Lagerung der Schloßnuß und je ein ober- und unterhalb der zentralen Öffnung 132 angeordnetes und in das Kappeninnere ragendes Auge 134 mit einer eingesenkten Bohrung 136 zur Aufnahme der Befestigungsschraube 72 auf. Vom Kappenboden 130 gehen zwei zu den Führungsschlitzen 138 parallele längere Seitenwände 140 aus, sowie dazu senkrechte kürzere Seitenwände 142, welche letztere an das Auge 134 anschließen und von deren Endkanten jeweils eine in das Kappeninnere ragende Stütz- und Führungswand 143 ausgehen, die jeweils zur längeren Seitenwand 140 parallel im Abstand dazu angeordnet ist und mit dieser jeweils einen Teil des Führungsschlitzes 138 bildet. Dieses Kappenteil 71 paßt auf das beschriebene Basisteil 168, wobei die Wand 143 bis nahe zur inneren Stirnfläche des Basisteils 168 (bzw. 68 gemäß Fig. 3) reicht. Der von den Befestigungsschrauben 72 ausgeübte Preßdruck wird allerdings von den Stirnflächen der Seitenwände 142, 140 auf die Randbereiche des Türblattdurchbruches 32 (gemäß Fig. 4) übertragen und dient dazu, den Verschluß im Türblatt sicher festzuhalten, wie bereits ausgeführt.

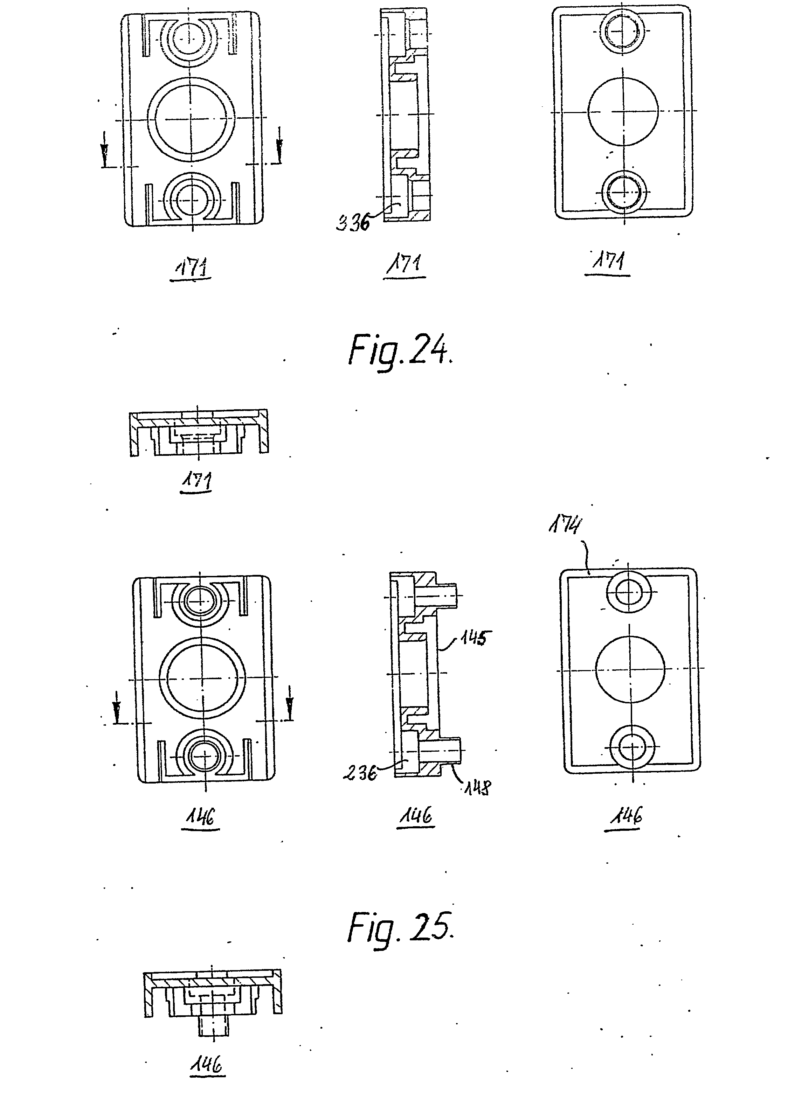

In der Fig. 15 ist eine etwas abgewandelte Ausführungsform des entsprechenden Basisteils zu erkennen, hier bezeichnet mit 468, welche weitere Ausführungsform gemäß der bisher beschriebenen Ausführungsform insofern abgewandelt ist, als der in das Türblatt hineinreichende Teil soweit verkürzt ist, daß die Einsenkung 94, die bisher zur Lagerung der Nuß gedient hat, wegfällt. Dieses abgewandelte Basisteil 468 ist für einen Schwenkhebelverschluß vorgesehen, der in Fig. 23 näher erläutert ist. Bei dieser Ausführungsform ist das Basisteil zweiteilig und besteht aus einem Grundplattenteil 468 und einem Lagerteil 146, welches Lagerteil 146 mit dem zugehörigen Kappenteil 171 im wesentlichen gleichen Aufbau zeigt, wie aus der Fig. 24, die das Kappenteil 171 zeigt, und der Fig. 25, die eine Wiedergabe des Lagerteils 146 ist, deutlich wird. Die beiden Teile unterscheiden sich lediglich dadurch, daß von dem einen Teil, hier ist es das Lagerteil 146, von den Rändern der eingesenkten Bohrungen 236 aus von der Verbindungsebene 145 für die beiden Teile 146, 171 in Richtung des anderen Teils vorspringenden Nasen bzw. ringförmige Vorsprünge 148 ausgehen, die in das gegenüberliegende Teil, hier das Kappenteil 171 angeordnete Rücksprünge, hier entsprechend erweiterte eingesenkte Bohrungen 336, passend eingreifen und eine gegenseitige Verriegelung der beiden Teile bewirkt. Man kann aber auch durch die eingesenkten Bohrungen 236, 336 Hohlnieten führen und durch diese die gegenseitige Verriegelung der Teile bewirken, woraufhin diese beiden Teile völlig identisch gemacht werden können. Mit Hilfe von Hohlnieten wäre eine Vormontage des Schloßnuß- und Stangenlagers im Herstellerwerk möglich.

Der weitere Vorteil wäre, daß dieses ggf. vormontierte Schloßnuß- und Stangenlager anstelle des dargestellten Schwenkhebelbasisteils 468 mit verschiedenartigen anderen, den Rest des Basisteils bildenden Schlüsselfängen oder ähnlichem kombiniert werden könnte, nicht dargestellt. Durch Identität der beiden die Schloßnuß- und Stangenlagerung bildenden Teile werden die Herstellungskosten und die Lagerhaltungskosten somit für eine Schloßserie verringert und es entsteht ein Bausatzsystem, das mit sehr wenigen Teilen außerordentlich vielgestaltige Anwendungsmöglichkeiten erlaubt.

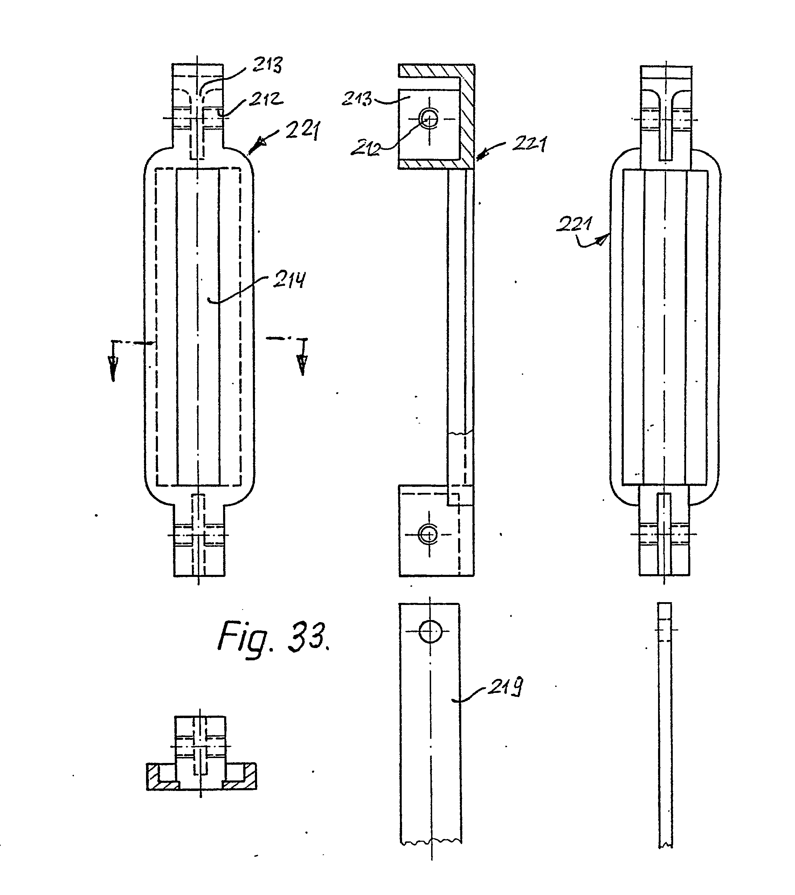

Bei der Ausführungsform gemäß Fig. 23 ist anstelle des Einsatzes 110 der Fig. 19 ein geringfügig abgewandel ter Einsatz 210 vorzusehen, welcher ein vergrößertes, an den Bohrungsdurchmesser des Basisteils 146 angepaßtes Lagerteil 150 (siehe Fig. 26) aufweist. In Fig. 26 ist auch ein vom Lagerteil 150 ausgehender Vierkant 152 zum Einstecken in die entsprechende Vierkantöffnung 154 des in Fig. 33 dargestellten zugehörigen Ritzels 262. Festgehalten wird das Schwenklager 210 mit Hilfe eines vom Vierkant 152 ausgehenden Bolzens, auf dem eine Schraube aufsetzbar ist, siehe Fig. 26.

In den Schwenkhebel 114 läßt sich ein handelsübliches Zylinderschloß 164, siehe Fig. 1 und Fig. 21, in eine entsprechende Öffnung 180 einschieben und mittels einer Schraube 182 festlegen, die in eine entsprechende eingesenkte Bohrung 184 im Griff 114 eingesetzt werden kann. Der Schwenkhebel 114, der mittels eines Stiftes, der in eine Bohrung 186 eingepreßt werden kann, am Schwenklagerteil 210 oder 110 anlenkbar ist, besitzt an seinem freien Ende einen Vorsprung 188, der im wesentlichen das Zylinderschloß umgibt und festhält, jedoch den Bewegungsbereich des Daumens 166 des Zylinderschlosses frei läßt, siehe den Bereich 190. Die Ausnehmung ist zweiseitig, um den Daumen 166 wahlweise links oder rechts herausführen zu können, dies wiederum für eine Rechts/Linksverwendung des Verschlusses. Begrenzt wird die Daumenbewegung durch die Anschlagfläche 192.

Die Verriegelung erfolgt dadurch, daß nach Eindringen des Vorsprungs 188 des Hebels 114 in die entsprechend geformte Öffnung 196 der Grundplatte 168 beim Ausschwenken des Daumens 166 dieser eine Auflauffläche 194 hintergreift und verriegelnd in Eingriff nimmt.

Im übrigen ist die in Fig. 14 dargestellte Grundplatte trogförmig ausgebildet, um den Hebel 114 zumindest etwa hälftig aufzunehmen und so zu verhindern, daß zu stark vorspringende Teile entstehen, die bei Schaltschränken nachteilig sind, weil sie eventuelle Fluchtwege behindern können.

Der Schwenkhebel weist bezüglich seiner Ausschwenkachse 598 eine Anschlagfläche 200 auf, die die Ausschwenkbewegung des Hebels 114 dadurch begrenzt, daß sie sich gegen das Schwenklager 210 legt. Ein am freien Ende des Hebels 114 vorgesehener Vorsprung 202 erleichtert das Ergreifen des Hebels 114 in eingeschwenktem Zustand und kann gleichzeitig dazu dienen, eine Plombierungsvorrichtung aufzunehmen, beispielsweise in Form eines Loches 181, durch das ein Plombierungsdraht gezogen werden kann. Schwenkhebel 114 wie auch Grundplatte 168 besitzen die für die Spritzgußtechnik günstige Ausgestaltung, nämlich mit Rücksprüngen 204, wo ohne Gefährdung der Festigkeit des Bauteils Material eingespart werden kann, wobei gleichzeitig für möglichst gleichmäßige Wandstärke Sorge getragen wird, was spritzgußtechnisch von Vorteil ist.

Wie die Fig. 21 erkennen läßt, ist der Daumen 166 in einer 45°-Stellung angeordnet, statt der üblichen 90°-Stellung. Dies dient ver Verringerung des seitlichen Platzbedarfes. Aus ähnlichen Gründen kann gemäß Fig. 21 eine zusätliche Verkröpfung 162 in der Betätigungsstange 18 vorgesehen werden, die dem Zylinderschloß 164 des Schwenkhebels 114 etwas mehr Platz verschafft, falls dies gewünscht sein sollte. Die Verkröpfung ist dabei derartig, daß die vom Durchbruch weg gerichtete Fläche des verkröpften Stangenbereiches annähernd zur entsprechenden Außenfläche des Schloßkastens 16 flüchtet.

Des weiteren ist aus Fig. 21 zu erkennen, daß die Seitenfläche 208 der das Türblatt hintergreifenden Halteteile 175 eine einseitige Führung für die Stange 18 bilden, so daß ein Wegknicken der Stange 18 und damit eine eventuelle Behinderung des Daumens 166 verhindert wird.

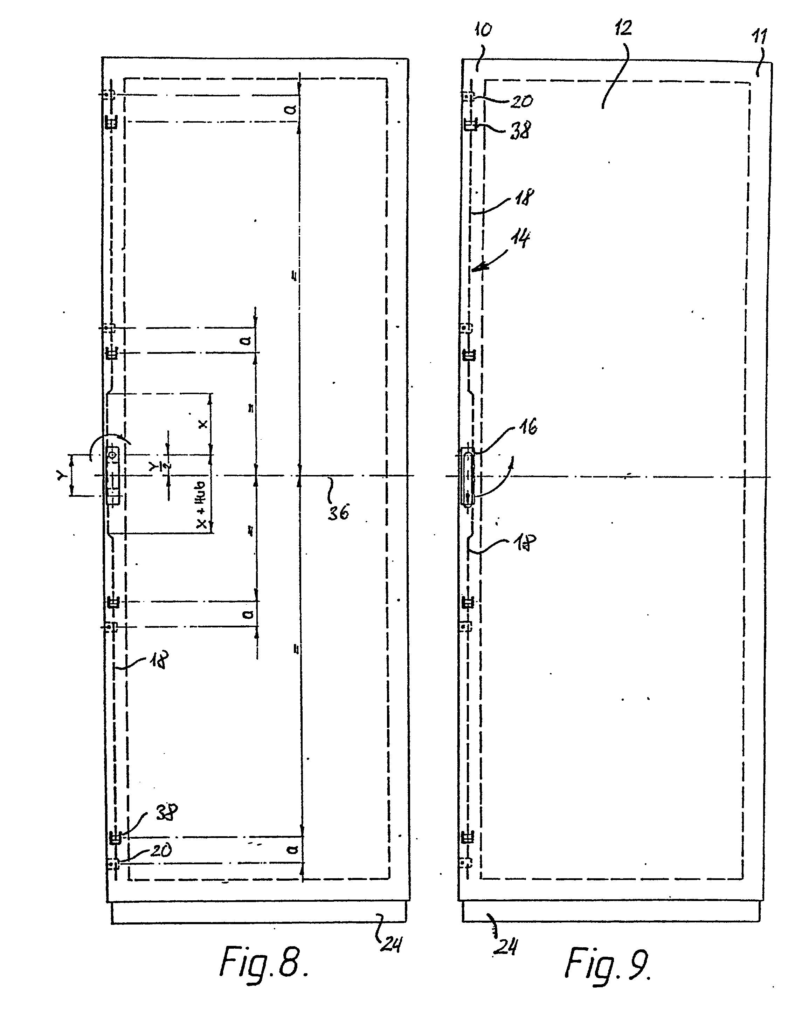

Der Schwenkhebelstangenverschluß gemäß den Fig. 1 bis 26 läßt sich dadurch besonders einfach im Verkantungsraum einer Blechschranktür montieren, daß zunächst die Stangenführung 20 über die Stangen 18 geklipst oder geschoben werden, sofern diese den in Fig. 7 dargestellten Aufbau haben, woraufhin die Stangenführungen 20 auf die Stehbolzen 58 gesteckt und mit einer Mutter 56 befestigt (oder alternativ mit einer Schraubbolzenbefestigung befestigt werden), daß dann das die Schwenkhebelaufnahme bildende Basisteil 168 von außen montiert wird, daß dann das Ritzel 62 mit dem zugehörigen Betätigungsdorn, z.B. 152 gemäß Fig. 26, eingesteckt und dann das Kappenteil 71 übergestülpt und das ganze mittels der zwei Schrauben 72 festgelegt wird. Dabei wird das Schaltschranktürblech fest zwischen die Grundplatte oder Basis 168 bzw. 468 und das übergestülpte Kappenteil 70 eingeklemmt. Von den Stangen 18 auf das Schloß übetragene Verschiebungskräfte werden dabei von der Grundplatte aufgenommen, nicht von der Klemmverschraubung, so daß gegenüber älteren Konstruktionen die Gefahr des Lockerns der Befestigung nicht gegeben ist.

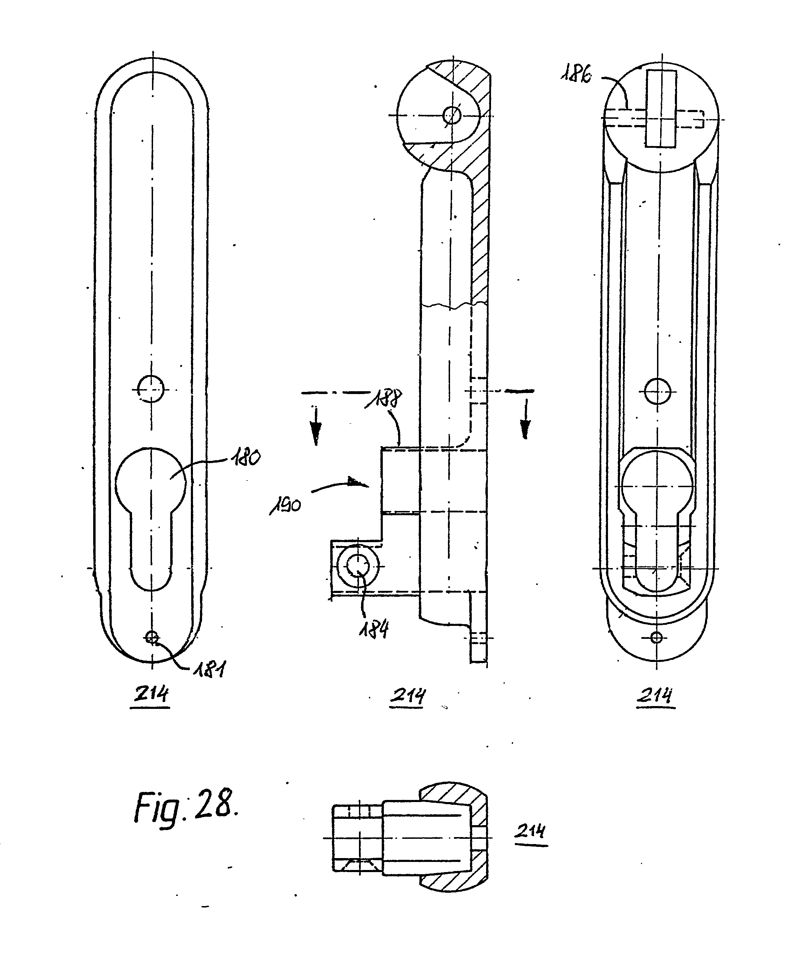

In Fig. 27, einer ähnlichen Darstellung wie Fig. 14, ist eine noch etwas weiter abgewandelte Ausführungform eines Basisteils oder Grundplatte 268 zu erkennen, bei der nur ein Vorsprung 175 das Türblatt verklemmend hintergreift. Zu dieser Fig. 27 paßt ein Schwenkhebel, wie er in Fig. 28 dargestellt ist, wobei der Schwenkhebel gemäß Fig. 28 ähnlich aufgebaut ist wie der Schwenkhebel gemäß Fig. 20, aber etwas schmäler und etwas kürzer und daher für bestimmte Anwendungen noch günstigere Eigenschaften besitzt. Insbesondere fehlt die Anschlagfläche 192, so daß der Schließdaumen volle Bewegungsfreiheit erhält. Dadurch ist dieser Stangenhebelverschluß noch vielseitiger anwendbar. So läßt sich der Schwenkhebel der Fig. 28 auch mit einer Grundplatte 368, siehe Fig. 29, einsetzen, die nicht mit einem hintergreifenden Vorsprung 268 ausgestattet ist, sondern statt dessen mit einem Halteteil 175, das im Bereich des zweiten Rechteckdurchbruchs 34 mit der Grundplatte 368 verschraubbar ist. Zu diesem Zweck besitzt die Grundplatte 368 am entsprechenden Ansatz 269 der Grundplatte 368 Bohrungen 267 zur Aufnahme von Befestigungsschrauben 265, die gemäß der Fig. 29 jeweils einen Klemmwinkel 275 zum einen gegen die Hinterfläche des Ansatzes 269, zum anderen gegen die innere Wandfläche des Türblatts 12 drücken und dadurch das Türblatt 12 einklemmen. Statt dessen kann auch ein hier nicht dargestellter Bügel Verwendung finden, der mit seinen Schenkelenden sich auf dem Türblatt 12 abstützt, ausreichend Raum für den Zylinder 164 bietet und Bohrungen zur Aufnahme der Schrauben 265 aufweist (nicht dargestellt). Ein derartiger Flügel würde die Seitenbereiche des Zylinderschlosses 164 freilassen.

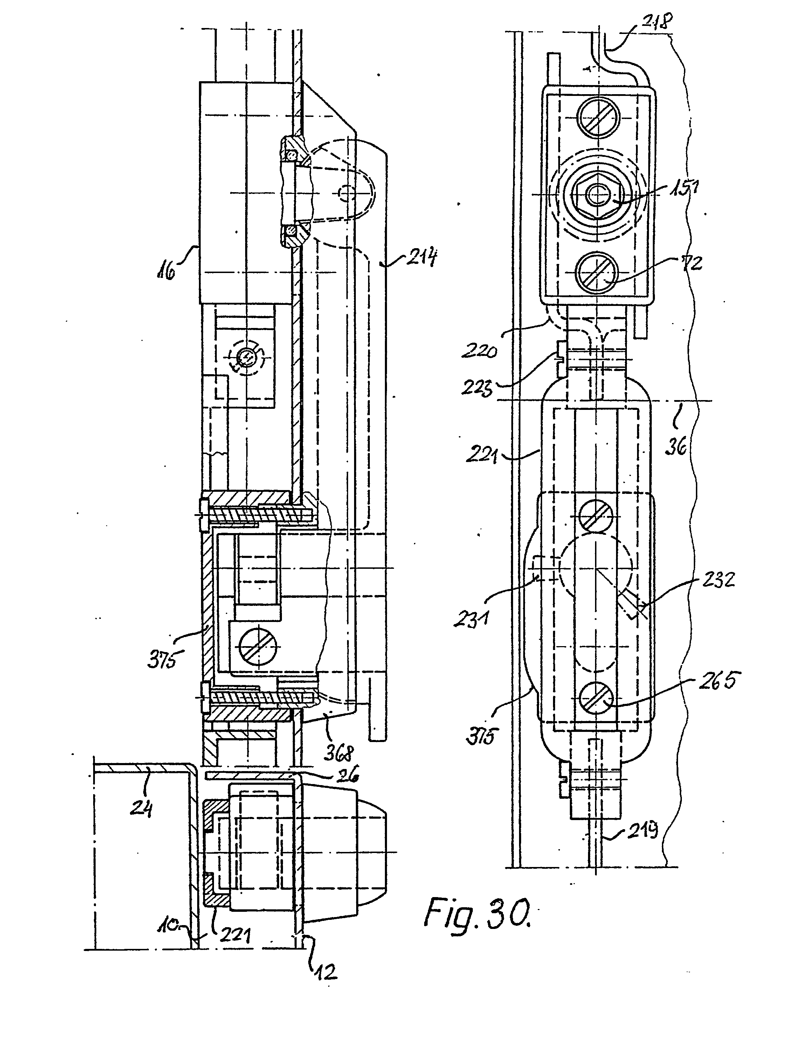

Soll die ganze Anordnung abgedichtet werden, was in besonderen Fällen von Vorteil sein kann, kann statt des Bügels eine das Zylinderschloß 164 völlig umschließende Kappe 375 angewendet werden, wie aus Fig. 30 zu erkennen ist.

Fig. 29 zeigt außerdem eine weitere Besonderheit gegenüber den bisherigen Ausführungsformen, indem im Bereich der Schwenkhebellagerung eine O-Ringdichtung 263 zu erkennen ist. Zu diesem Zweck besitzt die Grundplatte, siehe auch Fig. 27, eine entsprechende Einsenkung 261, ähnlich der Einsenkung 94 gemäß Fig. 14, jedoch hier für einen anderen Zweck. Das Schwenklage 310 hat hier einem Durchmesser, der kleiner als der Durchmesser der Einsenkung 261 ist, aber gröber als der des kreisförmigen Durchbruchs 259, so daß das Lager 310 sicher geführt wird. Aus der Fig. 29 ist auch zu erkennen, wie das Ritzel 262 auf dem Vierkant (in Fig. 26 mit 152 bezeichnet) aufgeschoben und dann durch eine auf einen vom Vierkant 152 ausgehenden Gewindebolzen 153 aufgeschraubte Mutter 151 festgehalten ist.

Die Ausführungsform der Fig. 29 ist im Bereich des Zylinderschlosses bei dieser Ausführung so schmal, daß die Stange 18 ohne zusätzliche Verkröpfung an dem Zylinderschloß 164 vorbeigeführt werden kann.

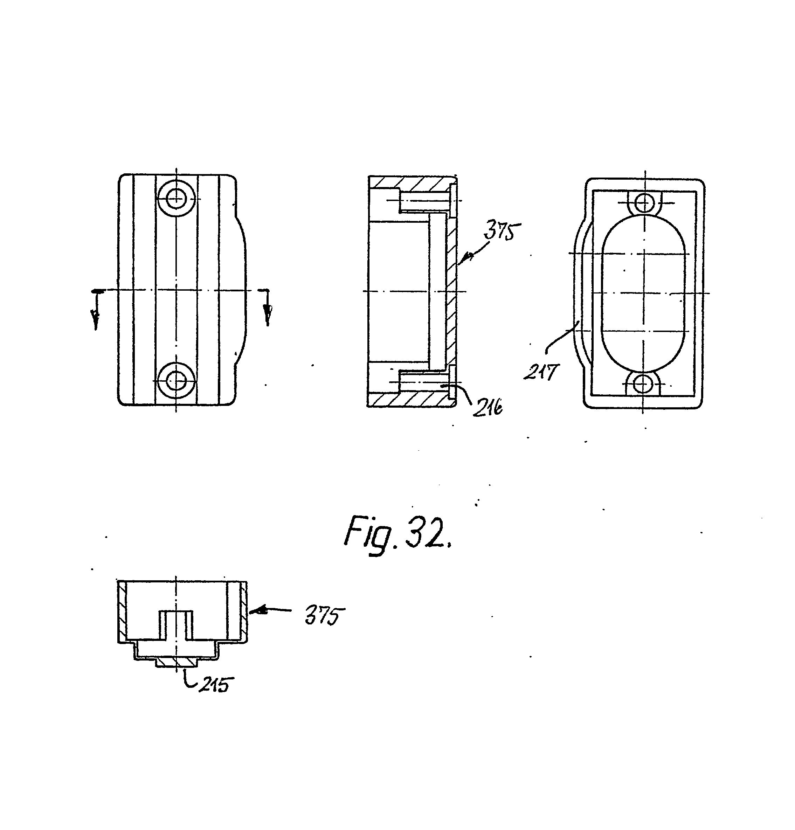

Demgegenüber ist bei Fig. 30 eine geteilte Stangenanordnung vorgesehen, nämlich eine obere Stange 218, eine mittlere Stange 220, und eine untere Stange 819. Die mittlere Stange 220 ist ähnlich geformt wie die Stange 218, trägt jedoch nur einen kurzen Ansatz, an dem ein Stangenkupplungsstück 221 angebracht ist, das um den Schließzylinder und dessen Abdeckkappe 375 herum eine Verbindung zu der unteren Stange 219 herstellt. Dieses Verbindungsstück, das in Fig. 33 nochmals herausgezeichnet ist, ermöglicht es, trotz des von der Kappe 375 weitgehend in Anspruch genommenen Raumes in dem engen Abkantkanal 10 einer Blechschranktür noch eine stabile und symmetrische Verbindung herzustellen, die wiederum ein Wenden der Stange ermöglicht. Beispielsweise müßte dazu lediglich die Schraube 223 aus der Gewindebohrung 212 herausgeschraubt werden, außerdem die Mutter 151 entfernt und durch Entfernen der Schrauben 72 der Schloßkasten 16 geöffnet werden, woraufhin die mittlere Stange 220 sowohl aus dem Schloßkasten wie auch aus dem Kanal 213 herausgezogen werden kann, um anschließend eine um 180° gewendete Montage vorzunehmen, wobei gleichzeitig auch die Stange 218 umgelegt wird. Nach Einschrauben der Schrauben 223, 72 und der Mutter 151 ist dann die Drehrichtung für die Betätigung des Stangenverschlusses geändert. Die entsprechende Befestigung der unteren Stange 219 der Kupplung 211 braucht dazu nicht gelöst zu werden. Der von der Kupplung gebildete Schlitz 214 nimmt einen Deckelvorsprung 215 der Kappe 375 auf, die in Fig. 32 noch einmal herausgezeichnet ist. Dadurch wird zum einen eine gewisse Führung ermöglicht, zum anderen eine Bewegungsbegrenzung, und schließlich Platz für eingesenkte Befestigungslöcher 216 in der Kappe 375 geschaffen, mit der die Kappe auf der Grundplatte unter Zuhilfenahme der bereits erwähnten Bohrungen 267 und entsprechender längerer Schrauben 265 befestigt werden kann.

Die in Fig. 32 dargestellte Ausbauchung 217 schafft Raum für die Anordnung eines 90°-Daumens, wie in Fig. 30 bei 231 zu erkennen ist, während bei 231 bei 45°-Daumen, siehe Bezugszahl 232, diese Ausbauchung nicht erforderlich ist.

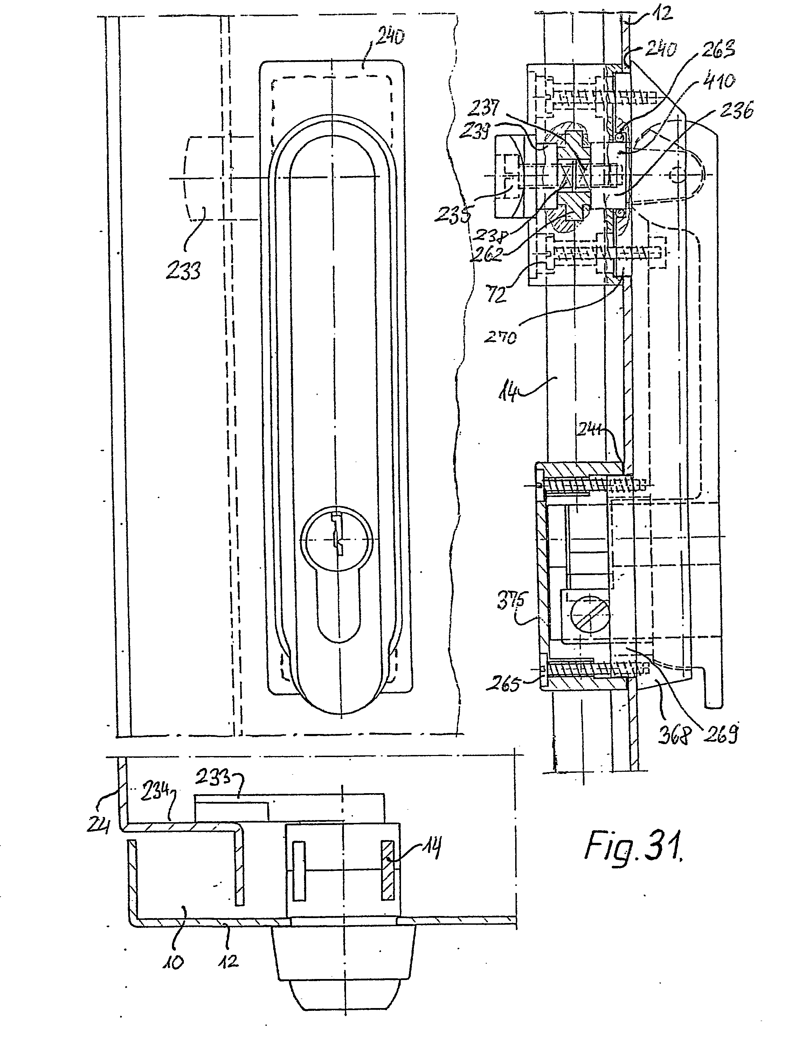

Fig. 31 zeigt die Verwendung des Stangenverschlusses gemäß Fig. 29 außerhalb des Abkantungskanals 10, bei dem in üblicher Weise mit einer zusätzlichen Zunge 133 gearbeitet wird, die sich hinter einer Abkantfläche 234 des Schrankkorpus 24 legt und dadurch die Verriegelung des Türblatts 12 (ergänzend zur Verriegelung durch die Stange 14) bewirkt. Die Befestigung der Zunge 233 kann mit Hilfe eines Schraubbolzens 235 erfolgen, der in eine entsprechende Gewindebohrung des Schwenkhebellagers 410 einbringbar ist. Eine derartige Gewindebohrung ist auch in Fig. 19 bei dem dort dargestellten Lager 110 vorhanden, doch weist das Lager 410 eine etwas andere Form insofern auf, als von dem zylindrischen Lagerteil 236 ein verkürzter Vierkant 237 ausgeht, der etwas weniger als die Hälfte des Vierkantdurchbruchs des Ritzels 262 einnimmt. Die andere Hälfte dieses Vierkantdurchbruchs des Ritzels 262 wird von einem Vierkant 238 eingenommen, der Teil der Zunge 235 ist, die außerdem wiederum ein Lagerteil 239 ähnlich dem Lagerteil 236 der Schwenkhebellagerung aufweist, wobei alle diese Teile wiederum durch eine die Schraube 235 aufnehmende Bohrung durchsetzt sind. Gewinde weist allerdings nur die Bohrung im Bereich des Schwenkhebellagers 410 auf, so daß die Teile 410, 262 und 233 beim Anziehen der Schraube 235 miteinander verklemmt werden.

Ein gemäß Fig. 31 montierter Verschluß liegt im Dichtungsbersich eines Schaltschrankes. Aus diesem Grunde ist auch hier die abdichtende Kappe 375 vorgesehen, wobei hier auf das Kupplungsteil 375 nicht verwendet wird, weil genügend Platz für die Anordnung der Stange 14 oder auch zweier gegenläufiger Stangen zur Verfügung steht. Weitere Abdichtungs maßnahmen können dadurch getroffen werden, daß der bereits erwähnte O-Ring 263 vorhanden ist außerdem können zwischen den die Durchbrüche 32, 34 umgebenden Auflagerandbereiche 240 der Grundplatte 368 bzw. des Türblatts 12 Dichtungsblätter angeordnet werden. Weitere Dichtungsmaßnahme wären denkbar zwischen der Auflagefläche der Kappe 375 und der des Türblatts 12 bzw. 241, sowie u. U. im Bereich der Köpfe der Schrauben 265.

Es sei noch erwähnt, daß die Kappe 375 jeweils so gelegt wird, daß sie mit ihrem ausgebauchten Teil in Richtung des Daumens weist, so daß auch bei einer 90°-Daumenanordnung Zylinderschlösser sowohl mit rechts wie auch mit links herausstehenden Daumen verwendet werden können. Werden ausschließlich Zylinder mit 45°-Daumen verwendet, wird die Ausbauchung 217 nicht benötigt.

Es sei noch erwähnt, daß der erfindungsgemäße Schenkhebelstangenverschluß zwar vorzugsweise für zwei gleich große und in der Form rechteckige Durchbrüche vorgesehen ist, weil dies seine Vorteile besonders zur Geltung kommen läßt. Grundsätzlich wäre es aber auch möglich, die Ansätze so auszugestalten, daß sie für runde, ggf. auch unterschiedliche Größe aufweisende Durchbrüche geeignet ist.

Es wäre auch denkbar, den z. B. für rechteckige Durchbrüche vorgesehenen Ansatz mit Hilfe einer Adapterscheibe und -ring an einen rechteckigen Durchbruch größerer Abmessungen anzupassen, oder auch an einen runden Durchbruch ausreichender Größe, wobei natürlich auch der Abstand der Durchbrüche geeignet sein muß. Das könnte z. B. von Vorteil sein, wenn ein vorhandener Schwenkgriffverschluß, der andere, größere Durchbrüche erfordert, durch einen erfindungsgemäßen Verschluß ersetzt werden soll.

**Patentansprüche**

1. Mit Zylinderschloß (164) versehener Schwenkhebelstangenverschluß für Montage in zwei vorzugsweise gleich großen und vorzugsweise rechteckigen Durchbrüchen (32, 34) von Blechschranktüren (12), bestehend aus einem Schloßkasten (16) mit durch das Türblatt (12) nach außen geführter Schwenkhebelbetätigungseinrichtung zum Antrieb von zumindest einer parallel zur Türkante verlaufenden Verschlußstange (18) und mit einem den Schwenkhebel (114) in seiner eingeschwenkten Stellung festhaltenden Zylinderschloß (164), wobei der Schwenkhebelverschluß eine die Aufnahmemulde für den Schwenkhebel (114) bildende Grundplatte (168, 268, 368, 468) umfaßt, die im Bereich der Durchbrüche (32, 34) einstückig von ihr ausgehende und in die Durchbrüche eindringende und die Grundplatte in den Durchbrüchen ausrichtende Ansätze (169, 170; 269, 270) aufweist und den Verschluß mit dem Türblatt (12) fest verbindet, wobei der eine Ansatz (169, 269) eine Aufnahme für das im Ende des Schwenkhebels (114, 214) angeordnete Zylinderschloß (164) bildet, und dieser Ansatz (169, 269) zusammen mit einem von ihm ausgehenden (z.B. 175 in Fig. 14) oder mit ihm verschraubten Halteteil (z.B. 275, Fig. 29, 375, Fig. 30) das Türblatt (12) im Bereich des einen Durchbruchs (34) zentrierend einklemmt, dadurch gekennzeichnet, daß die zumindest eine Verschlußstange (18) aus Flachbandmaterial gefertigt ist und durch den Schloßkasten (16) einstückig hindurchreicht, daß der andere Ansatz (170, 270) ein Teil des Schloßkastens (16) ist und daß dieser andere Ansatz (170, 270) zusammen mit einem weiteren Teil (z.B. 71, Fig. 16; 171, 146, Fig. 24) des Schloßkastens (16) das Türblatt (12) im Bereich des ersten Durchbruchs (32) zentrierend einklemmt.

2. Schwenkhebelstangenverschluß nach Anspruch 1, dadurch gekennzeichnet, daß der Ansatz (169) der Grundplatte (168, Fig. 14; 268, Fig. 27) den das Zylinderschloß (164) aufnehmenden Durchbruch (34) in der vom anderen Durchbruch (32) abgewandten Kante mittels eines (oder mehrerer) hinterschnittenen Vorsprungs (175) hintergreift.

3. Schwenkhebelstangenverschluß nach Anspruch 2, dadurch gekennzeichnet, daß der oder die hinterschnittenen Vorsprünge (175) eine nach außen gerichtete Schrägfläche (176) mit einem Winkel (178) aufweisen, der annähernd dem Winkel entspricht, mit dem die Grundplatte (168, 268, 468) in den zugehörigen Durchbruch (34) vor Einschieben in den anderen Durchbruch (32) einführbar ist.

4. Schwenkhebelstangenverschluß nach Anspruch 1, dadurch gekennzeichnet, daß der Ansatz (269) der Grundplatte (368) Bohrungen (267) zur Aufnahme von Befestigungsschrauben (265) für ein auf dem Ansatz (269) aufschraubbares Halteteil (275, 375) besitzt.

5. Schwenkhebelstangenverschluß nach Anspruch 4, dadurch gekennzeichnet, daß das aufschraubbare Halteteil aus zwei Klemmwinkeln (275) oder einem Bügel besteht.

6. Schwenkhebelstangenverschluß nach Anspruch 4, dadurch gekennzeichnet, daß das mittels Befestigungsschrauben (265) aufschraubbare Halteteil aus einer den Ansatz (269) der Grundplatte (368) einschließlich Zylinderschloß (164) umschließenden Kappe (375) besteht.

7. Schwenkhebelstangenverschluß nach einem der Ansprüche 1 bis 6, dadurch gekennzeichnet, daß der Schloßkasten (16) ein Ritzel (62) zum Antrieb von perforierten oder gezahnten, aus Flachbandmaterial bestehenden Verschlußstangen (18), die in dem Schloßkasten (16) axial verschieblich gelagert sind, sowie eine das Ritzel (62) tragende, in einem Schloßnuß- und Stangenlager (60) drehbar gehaltenen Schloßnuß (64) umfaßt, die mittels durch den ersten Durchbruch (32) nach außen geführter und den Schwenkhebel (114) tragender Betätigungswelle verdrehbar ist, und daß das Schloßnuß- und Stangenlager (60) des Schlosses (16) des Schwenkhebelstangenverschlusses (14) ein von der Grundplatte (168; 468) gebildetes Basisteil, das das eine Ende der Schloßnuß (64) lagert, und ein auf das Basisteil der Grundplatte (168; 468) aufsetzbares und dieses mittels Schrauben o.dgl. (72) verbindbares Kappenteil (71, 171) aufweist, das das andere Ende der Schloßnuß (64) lagert und das, ggf. zusammen mit dem Basisteil der Grundplatte (168, 468), Führungsschlitze (74, 76) für die Stange(n) aufweist.

8. Schwenkhebelstangenverschluß nach Anspruch 7, dadurch gekennzeichnet, daß das Kappenteil (71; 171) im Kappenboden eine zentrale Öffnung (132) für die Lagerung der Schloßnuß (64) und je ein ober- und unterhalb der zentralen Öffnung (132) angeordnetes, in das Kappeninnere ragendes Auge (134) mit einer eingesenkten Bohrung (136) zur Aufnahme einer Befestigungsschraube aufweist.

9. Schwenkhebelstangenverschluß nach Anspruch 7 oder 8, dadurch gekennzeichnet, daß vom Kappenboden (130) zwei zu den Führungsschlitzen (138) parallele längere Seitenwände (140) und zwei dazu senkrechte kürzere Seitenwände (142) ausgehen, und daß die Endkanten der kürzeren Seitenwände (142) mit jeweils einer in das Kappeninnere ragenden Stütz- und Führungswand (143) verbunden sind, die jeweils zur längeren Seitenwand (140) parallel im Abstand angeordnet sind und den Führungsschlitz (138) bilden.

10. Schwenkhebelstangenverschluß nach Anspruch 7, 8 oder 9, dadurch gekennzeichnet, daß das Schloßnuß- und Stangenlager aus einem Basisteil (146) und einem Kappenteil (171) von im wesentlichen identischem Aufbau besteht.

11. Schwenkhebelstangenverschluß nach Anspruch 10, dadurch gekennzeichnet, daß das Basisteil (146) und das Kappenteil (171) mittels durch die eingesenkten Bohrungen (236, 336) geführten Hohlnieten vormontiert sind.

12. Schwenkhebelstangenverschluß nach Anspruch 10, dadurch gekennzeichnet, daß an einem Teil, z.B. dem Basisteil (146), von der Verbindungsebene (145) für die beiden Teile in Richtung des anderen Teils vorspringende Nasen o. dgl. vorgesehen sind, die in entsprechende Rücksprünge des anderen Teils, z.B. des Kappenteils (171), eingreifen, wobei insbesondere von den Rändern der eingesenkten Bohrungen (236) ringförmige Vorsprünge (148) ausgehen, die in die entsprechend erweiterten eingesenkten Bohrungen (336) des anderen Teils (146) passend eingreifen.

13. Schwenkhebelstangenverschluß nach Anspruch 1, dadurch gekennzeichnet, daß auf die Ansätze (170; 270; 169; 269) eine Adapterscheibe oder ein Adapterring aufschiebbar ist, die eine Anpassung an Durchbrüche (32, 34) (z.B. rechteckige oder runde Durchbrüche) ermöglicht, die größer als die für die Ansätze benötigten Durchbrüche und so angeordnet sind, daß die mit Adapterscheibe versehenen Ansätze in den Durchbrüchen einsetzbar sind.

14. Schwenkhebelstangenverschluß nach einem der Ansprüche 1 bis 13, dadurch gekennzeichnet, daß bei einer Blechschranktür (12) mit einem Verkantungsraum (10) mit zwei gleich großen, vorzugsweise rechteckigen Durchbrüchen (32, 34) der Schloßkasten (16) und die Stange(n) (18) im Verkantungsraum (10) angeordnet sind.

**Claims**

1. Pivot lever bar closure provided with a cylinder lock (164) for installation in two preferably rectangular apertures (32, 34), preferably of identical size, of sheet metal cabinet doors (12), consisting of a lock case (16) with pivot lever actuating device led through the door leaf (12) to the outside for driving at least one closure bar (18) extending parallel to the door edge, and with a cylinder lock (164) fixedly holding the pivot lever (114) in its swung-in position, the pivot lever closure comprising a base plate (169, 268, 368, 468) forming the receiving trough for the pivot lever (114), said base plate having shoulders (169, 170; 269, 270) extending from it in one piece in the area of the apertures (32, 34) and extending into the apertures and aligning the base plate in the apertures and fixedly connecting the closure with the door leaf (12), whereby one shoulder (169, 269) forms a seat for the cylinder lock (164) arranged in the end of the pivot lever (114, 214), and this shoulder (169, 269), together with a holding part extending from it (for example, 175 in Fig. 14) or screwed to it (for example 275, Fig. 29, 375, Fig. 30) clamps the door leaf (12) in the region of the one aperture (34) centring it, characterised in that the at least one closure bar (18) is made from flat strip material and extends through the lock case (16) as one piece, that the other shoulder (170, 270) is part of the lock case (16) and that this other shoulder (170, 270) together with a further part (e.g. 71, Fig. 16; 171, 146, Fig. 24) of the lock case (16) clamps the door leaf (12) in the area of the first aperture (32) centring it.

2. Pivot lever bar closure according to claim 1, characterised in that the shoulder (169) of the base plate (168, Fig. 14; 268, Fig. 27) reaches behind the aperture (34) receiving the cylinder lock (164) at the edge facing away from the other aperture (32) by means of one (or several) undercut projection(s) (175).

3. Pivot lever bar closure according to claim 2, characterised in that the undercut projection(s) (175) has(have) an oblique area (176) with an angle (178) directed toward the outside, said angle corresponding approximately to that angle, at which the base plate (168, 268, 468) can be inserted into the associated aperture (34) before insertion into the other aperture (32).

4. Pivot lever bar closure according to claim 1, characterised in that the shoulder (269) of the base plate (368) has bores (267) for receiving fixing screws (265) for a holding part (275, 375) which can be screwed onto the shoulder (269).

5. Pivot lever bar closure according to claim 4, characterised in that the holding part, which can be screwed on, consists of two clamping elbows (275) or one bow.

6. Pivot lever bar closure according to claim 4, characterised in that the holding part, which can be screwed on by means of fastening screws (265), consists of a cap (375) encompassing the shoulder (269) of the base plate (368) including the cylinder lock (164).

7. Pivot lever bar closure according to any one of claims 1 to 6, characterised in that the lock case (16) comprises a pinion (62) for driving perforated or denticulated closure bars (18) consisting of flat strip material, which are supported axially displaceable in the lock case (16), as well as a lock nut (64) carrying the pinion (62) and held rotatably in a lock nut and bar bearing (60), which can be rotated by means of an actuating shaft led through the first aperture (32) to the outside and carrying the pivot lever (114), and that the lock nut and bar bearing (60) of the lock (16) of the pivot lever bar closure (14) has a base part formed by the base plate (168; 468), which base part supports the one end of the lock nut (64) and has a cap part (71; 171) which can be set onto the base part of the base plate (168; 468) and can be connected with it with screws or the like (72), said cap part supporting the other end of the lock nut (64), and – if need be together with the base part of the base plate (108; 468) – having guide slits (74, 76) for the bar(s) (18).

8. Pivot lever bar closure according to claim 7, characterised in that the cap part (71; 171) has a central opening (132) in the cap bottom for bearing the lock nut (64) and one lug (134) arranged above and below the central opening (132) and projecting into the interior of the cap with a sunken bore (136) for receiving a fixing screw.

9. Pivot lever bar closure according to claim 7 or 8, characterised in that from the cap bottom (130) two longer sidewalls extend parallel to the guide slits (138) and two shorter sidewalls (142) perpendicular to them, and that the end edges of the shorter sidewalls (142) are connected with support and guide walls (143) projecting in each instance into the interior of the cap, which are in each instance arranged at a distance parallel to the longer sidewall (140) and form the guide slit (138).

10. Pivot lever bar closure according to claim 7, 8 or 9, characterised in that the lock nut and bar bearing consists of a base part (146) and a cap part (171) of substantially identical structure.

11. Pivot lever bar closure according to claim 10, characterised in that the base part (146) and the cap part (171) are preassembled with tubular rivets leading through the sunken bores (236, 336).

12. Pivot lever bar closure according to claim 10, characterised in that on one part, for example, the base part (146), lugs or the like projecting from the connecting plane (145) for the two parts in the direction of the other part are provided, which engage into corresponding recesses of the other part, for example, cap part (171), whereby, in particular, from the edges of the sunken bores (236) annular projections (148) extend, which fittingly engage into the correspondingly enlarged sunken bores (336) of the other part (146).

13. Pivot lever bar closure according to claim 1, characterised in that an adaptor disk or ring can be slid onto the shoulders (170; 270; 169; 269), said disk or ring permitting adaptation to the apertures (32, 34) (for example, rectangular or round apertures), which are larger than the apertures needed for the shoulders and arranged in such a way that the shoulders provided with adaptor disk can be inserted into the apertures.

14. Pivot lever bar closure according to any one of claims 1 to 13, characterised in that in case of a sheet metal cabinet door (12) with a fillet gap (10) with two apertures (32, 34) of identical size, preferably of rectangular form, the lock case (16) and the bar(s) (18) are arranged in the fillet gap (10).

**Revendications**

1. Dispositif de fermeture par barre à levier pivotant comportant une serrure à barillet (164), destiné à être monté dans deux ouvertures de passage (32, 34), de préférence de mêmes dimensions et rectangulaires, ménagées dans des portes d'armoires (12) en tôle, constitué par un boîtier de serrure (16) comportant un dispositif de manœuvre du levier pivotant commandé de l'extérieur pour l'entraînement d'au moins une barre de fermeture (18) orientée parallèlement au bord de la porte et une serrure à barillet (164) qui maintient le levier pivotant (114) dans sa position d'engagement par pivotement, le dispositif de fermeture à levier pivotant comprenant une plaque de base (168, 268, 368, 468) qui contient la partie rentrante destinée à la réception du levier pivotant (114) et qui, dans la zone des ouvertures de passage (32, 34), comporte des parties advantices (169, 170, 269, 270), qui sont d'une seule pièce avec cette plaque et s'en écartent pour pénétrer dans les ouvertures de passage et qui orientent la plaque de base dans les ouvertures de passage, et relie solidement le dispositif de fermeture au battant (12) de la porte, l'une de ces parties (169, 269) constituant une partie de réception pour la serrure à barillet (164) montée à l'extrémité du levier pivotant (114, 214) et cette partie advantice (169, 269) bloquant en le centrant, en coopérant avec une partie de maintien (p.ex. 275, Figure 29, 375, Figure 30) qui part d'elle (p.ex. 175 sur la Figure 14) ou est vissée sur elle, le battant de porte (12) dans la zone de l'une des ouvertures de passage (34), caractérisé en ce que l'une au moins des barres de fermeture (18) est constituée par une bande plate et pénètre d'une seule pièce dans le boîtier de serrure (16), en ce que l'autre partie adventice (170, 270) constitue une partie de boîtier de serrure (16) et en ce que cette autre partie advantice (170, 270) assure, avec une autre partie (p.ex. 71, Figure 16, 171, 146, Figure 24) du boîtier de serrure (16), le blocage avec centrage du battant de porte (12) dans la zone de la première ouverture de passage (32).

2. Dispositif de fermeture par barre à levier pivotant selon la revendication 1, caractérisé en ce que la partie adventice (169) de la plaque de base (168, Figure 14; 268, Figure 27) s'engage, au moyen d'une ou de plusieurs parties saillantes (175) comportant des rentrants, derrière l'ouverture de passage (34) qui reçoit la serrure à barillet (164) et est ménagée dans le bord situé à l'opposé de l'autre ouverture de passage (32).

3. Dispositif de fermeture par barre à levier pivotant selon la revendication 2, caractérisé en ce que la ou les parties saillantes (175) comportant des rentrants présentent une surface oblique (176) qui est dirigée vers l'extérieur suivant un angle (178) qui est sensiblement égal à l'angle suivant lequel la plaque de base (168, 268, 468) peut s'engager dans l'ouverture de passage correspondant (34) avant l'engagement dans l'autre ouverture de passage (32).

4. Dispositif de fermeture par barre à levier pivotant selon la revendication 1, caractérisé en ce que la partie adventice (269) de la plaque de base (368) comporte des alésages (267) destinés à recevoir des vis de fixation (265) pour une pièce de maintien (275, 375) qui peut être vissée sur la pièce adventice (269).

5. Dispositif de fermeture par barre à levier pivotant selon la revendication 4, caractérisé en ce que la pièce de maintien qui peut se visser est constituée par deux pièces angulaires de serrage (275) ou par un étrier.

6. Dispositif de fermeture par barre à levier pivotant selon la revendication 4, caractérisé en ce que la pièce de maintien qui peut se visser sur moyen de vis de fixation (265) est constituée par une capuchon (375) qui entoure la partie adventice (269) de la plaque de base (368), y compris la serrure à barillet (164).

7. Dispositif de fermeture pour barre à levier pivotant selon l'une des revendications 1 à 6, caractérisé en ce que le boîtier de serrure (16) comporte un pignon (62) pour l'entraînement de barres de fermeture (18) perforées ou munies de dents, constituées par un matériau plat en bande, qui sont montées dans le boîtier de serrure (16) de manière à pouvoir se déplacer dans le sens axial, ainsi qu'un élément de serrure (64) qui porte un pignon (62) et est monté de manière à pouvoir tourner dans un palier de barre (60) et qui peut tourner sous l'action d'un arbre de commande qui traverse la première ouverture de passage (32) pour aller à l'extérieur et porte le levier pivotant (114), et en ce que le palier de pignon et de barre de serrure (60) de la serrure (16) du dispositif de fermeture par barres à levier pivotant (14) comporte une partie de base qui est constituée par la plaque de base (168, 468) et qui supporte l'une des extrémités du pignon de serrure (64) et un capuchon (71, 171) qui peut se placer sur la partie de base de la plaque (168, 468) et relier au moyen de vis ou de dispositifs analogues (72) la partie en question, qui porte l'autre extrémité du pignon de serrure (64) et qui, le cas échéant avec la partie de base de la plaque de base (168, 468), comporte des rainures de guidage (74, 76) pour la ou les barres (18).

8. Dispositif de fermeture par barres à levier pivotant selon la revendication 7, caractérisé en ce que la partie formant capuchon (71, 171) comporte au fond du capuchon une ouverture centrale (132), pour l'appui du pignon de serrure (64), et des œillets (134) situés au-dessus et au-dessous de l'ouverture centrale (132) et pénétrant à l'intérieur du capuchon et comportant un alésage enfoncé (136) pour la réception d'une vis de fixation.

9. Dispositif de fermeture pour barres à levier pivotant suivant l'une des revendications 7 ou 8, caractérisé en ce qu'à partir du fond du capuchon (130) partent deux parois latérales (140) assez longues parallèles aux rainures de guidage (138) et deux parois latérales (142) plus courtes perpendiculaires aux précédentes et en ce que les bords d'extrémité des parois latérales les plus courtes (142) sont reliées à des parois d'appui et de guidage (143) qiu dépassent à l'intérieur du capuchon et qui sont parallèles et à une certaine distance de la paroi latérale la plus longue (140) et constituent la rainure de guidage (138).

10. Dispositif de fermeture par barres à levier pivotant selon l'une des revendications 7, 8 ou 9, caractérisé en ce que le palier de pignon de serrure ou de barre est constitué par une partie de base (146) et par une partie formant capuchon (171) ayant essentiellement la même structure.

11. Dispositif de fermeture par barres à levier pivotant selon la revendication 10, caractérisé en ce que la partie de base (146) et la partie capuchon (171) sont préalablement montées au moyen de rivets creux engagés dans des alésages enfoncés (236, 336).

12. Dispositif de fermeture par barres à levier pivotant selon la revendication 10, caractérisé en ce qu'une partie, par exemple la partie de base (146), comporte des becs ou des éléments analogues qui font saillie depuis le plan de liaison (145), pour les deux parties, en direction de l'autre partie et qui s'engagent dans des parties en retrait correspondantes de l'autre partie, par exemple de la partie du capuchon (171), des parties saillantes annulaires (148), notamment, partant des bords des alésages enfoncés (236) et s'engageant exactement dans des alésages (336), élargis en conséquence, de l'autre partie (146).

13. Dispositif de fermeture par barres à levier pivotant selon la revendication 1, caractérisé en ce que, sur les parties adventices (170, 270, 169, 269), un disque d'adaptation ou un anneau d'adaptation peuvent être engagés et permettent une adaptation aux ouvertures de passage (32, 34) (par exemple ouvertures de passage rectangulaires ou rondes) qui sont plus grandes que les ouvertures de passage nécessaires aux parties adventices et sont disposées de telle manière que les parties adventices munies de disques d'adaptation peuvent s'engager dans les ouvertures de passage.

14. Dispositif de fermeture par barres à levier pivotant selon les revendications 1 à 13, caractérisé en ce que, dans le cas d'une porte (12) d'armoire en tôle comportant un espace de blocage (10) comprenant deux ouvertures de passage (32, 34) de mêmes dimensions, de préférence rectangulaires, le boîtier de serrure (16) et la ou les barres (18) sont placés dans l'espace de blocage (10).

Ansicht x

Schnitt B-B
mit Schwenkgriff

Fig.2.

Fig.1.

Schnitt B-B

Fig.3.

Fig.7.

Schnitt D-D

Fig.6.

Schnitt C-C

Fig. 4.

Fig.5.

Schnitt A-A

*Fig.8.*

*Fig.9.*

Fig.17.

Fig.18.

Fig.12.

Fig.10.

Fig.19.

Fig.22

Fig.11.

Fig.13.

# Fig.15.

# Fig.14.

**Fig. 16.**

**Fig. 34.**

Fig.20.

Fig. 26.

Fig. 21.

Fig.23.

_171_ 336 _171_ _171_

## Fig.24.

_171_

174

_146_ 145 236 148 _146_

## Fig. 25.

_146_

261

259

270

172

172

269

268

175    268

175    268

Fig. 27,

Fig. 28.

Fig. 29.

*Fig.30.*

Fig.31.

375

216

217

*Fig. 32.*

375

215

Fig. 33.